(19) Europäisches Patentamt
European Patent Office
Office européen des brevets

(11) **EP 4 760 606 A1**

(12) **EUROPEAN PATENT APPLICATION**

(43) Date of publication:
**17.06.2026 Bulletin 2026/25**

(21) Application number: **24315568.6**

(22) Date of filing: **10.12.2024**

(51) International Patent Classification (IPC):
**G06N 10/40** (2022.01)       **G06N 10/70** (2022.01)

(52) Cooperative Patent Classification (CPC):
**G06N 10/70; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Quandela**
**91300 Massy (FR)**

(72) Inventors:
• **Wein, Stephen**
**22300 Lannion (FR)**
• **Somaschi, Niccolo**
**75005 Paris (FR)**

• **Mansfield, Shane**
**75011 Paris (FR)**
• **De Gliniasty, Gregoire**
**91300 Massy (FR)**
• **Annoni, Emilio**
**94110 Arcueil (FR)**
• **Bourdoncle, Boris**
**75014 Paris (FR)**
• **Goubault De Brugiere, Timothée**
**91120 Palaiseau (FR)**
• **Music, Luka**
**75015 Paris (FR)**

(74) Representative: **Yes My Patent**
**32 Boulevard Richard Lenoir**
**75011 Paris (FR)**

(54) **SYSTEM AND METHOD FOR THE GENERATION OF ENTANGLED STATES OF QUBITS**

(57)     The present invention relates to a system and a method for generating entangled states of multiple quantum sources, capable of producing photonic qubits. The system includes a classical controller and various modules (pulse generation, source, multiplexing, entanglement, crossing network) controlled by the controller. Each pulse generation module controls a laser beam to control quantum sources, which generate photonic qubits. Photons are routed through switches, some directly to the entanglement module, and a crossing network creates two groups of photonic qubits for processing or release. The multiplexing module addresses each processed photonic qubit to a specific output at a designated time. The entanglement module applies quantum gates to selected quantum sources and measures their state

Fig. 1

EP 4 760 606 A1

**Description**

Technical field

The present invention relates to the technical field of quantum computing. Particularly, the invention relates to the generation of multi-qubit states, that may be configured to be represented by a graph state, and used for quantum computing.

Background of the invention

The utilization of entangled photonic resource states and certain graph states for quantum computation is increasing with a specific focus on graphs that provide loss tolerance and are constructed in a fault-tolerant manner using minimal resources.

Despite the significant advancements made in this field, certain disadvantages remain associated with the prior art solutions. One such disadvantage is the complexity and resource-intensive nature of constructing graphs that provide loss tolerance while maintaining fault tolerance. This overhead can lead to increased costs and reduced efficiency in quantum computation.

In light of these challenges, it is an objective of the present invention to overcome at least partially the aforementioned disadvantages by proposing novel and inventive system and method for constructing loss-tolerant graphs using minimal resources. By addressing these issues, the present invention aims to contribute to the advancement of quantum computation by reducing costs, increasing efficiency, and enhancing overall performance.

Summary of the invention

According to one aspect, the present invention relates to a system for generating entangled states of a plurality of quantum sources, said plurality of quantum sources being configured to produce at least one plurality of entangled photonic qubits, the system comprising:

> o At least one classical controller configured to control directly and/or indirectly, preferably in real-time, a plurality of modules taken among at least:

- Preferably, a pulse generation module;
- A source module;
- A multiplexing module;
- An entanglement module;
- Preferably, a crossing network module;

> o Optionally, at least one pulse generation module configured to control at least one laser beam, the laser beam being configured to control at least one quantum source, the pulse generation module comprising:

- At least one pulsed laser configured to emit at least one pulsed laser beam;
- At least one pulse sequencer configured to sequence at least a plurality of pulsed laser beams according to a predetermined order;
- At least one classical switch configured to receive at least one instruction, preferably in real-time, from the classical controller, to output or block at least one sequenced pulsed laser beam of the plurality of sequenced pulsed laser beams;

o At least one source module configured to generate a plurality of photonic qubits, the source module comprising:

- At least one plurality of quantum sources comprising:

  - at least one quantum source comprising at least one source qubit, and being configured to produce at least one photonic qubit by emitting at least one photon entangled with its source qubit;
  - Optionally, at least one other quantum source being configured to produce at least one photonic qubit by emitting at least one photon;

- At least one plurality of switches, each switch of the plurality of switches being configured to output at least one photon according to a first direction or a second direction; at least one quantum source of the plurality of quantum sources being associated with at least one switch of the plurality of switches; Preferably, some quantum sources may be routed directly to the entanglement module;

o At least one crossing network module configured to create a first group of photonic qubits and a second group of photonic qubits, the photonic qubits of the first group being configured to establish entanglement with at least one other quantum source, and the photonic qubits of the second group being configured to be processed and released from the system;

o At least one multiplexing module configured to address at least one photonic qubit to at least one predetermined output of the system, preferably at a predetermined time, the multiplexing module comprising:

- At least one switching network sub-module configured to route each photonic qubits of the second group to at least one predetermined output of the system, the switching network sub-module comprising a plurality of sub-switches;

o At least one entanglement module configured to apply at least one quantum gate and/or quantum measurement on at least one quantum source of the photonic qubit of the first group by applying at least one quantum gate on at least one photonic qubit of the first group and by measuring the state of said photonic qubit, the entanglement module comprising:

- At least one linear-optical transformation device configured to prepare at least one photonic qubit of the first group to be measured by at least one detector;
- At least one plurality of detectors configured to measure the state of each photonic qubit coming from the interferometer to determine if at least one quantum gate has been applied on at least one of their respective quantum sources.

According to another aspect, the present invention relates to a computer-implemented method for generating entangled states of a plurality of sources, said plurality of sources being configured to produce at least one plurality of entangled photonic qubits, the method being configured to be implemented by at least one system according to any one of the previous claims, the method comprising:

o A compilation phase configured to determine a series of steps of a construction process, the compilation phase comprising at least the following steps:

- Inputting a predetermined graph state $G_p$ of qubits and a set of predetermined constraints, the constraints of the set of predetermined constraints comprising at least:

  - A maximum number of sources, $N_{max}$
  - One or more metrics $M_i$ configured to be used to discriminate at least two processes to generate $G_p$
  - At least one predetermined threshold $\varepsilon_i$ associated with at least one metric $M_i$

- Determining at least a plurality of graphs $G_s$ that are local complements of $G_p$;
- For each determined graph $G_s$ that satisfies the constraints of the set of predetermined constraints, decomposing the determined graph $G_s$ into at least one construction process to construct the determined graph $G_s$ using one or more steps comprising at least one among: a measurement step, an entanglement step, and a local operation step such that it minimizes at least one predetermined metric $M_i(G_s)$ within the associated predetermined threshold $\varepsilon_i$;
- Selecting at least one determined graph $G_s$ that

satisfies the constraints of the set of predetermined constraints and that minimizes the best the set of predetermined constraints within the plurality of determined graphs, said selected graph associated with at least a plurality of construction processes;
- Selecting at least one construction process among the plurality of construction processes that satisfies the constraints of the set of predetermined constraints and that minimizes the best the set of predetermined constrains within the plurality of construction processes;
- Transpiling the selected construction process into instructions for the classical controller to control at least one of a pulse module, the source module, the entangling module, and the multiplexing module to implement the selected construction process;

o A construction phase configured to construct the predetermined graph state using the selected construction process, the construction phase comprising at least the following steps:

- A measurement step comprising at least the following sub-steps:

  - Triggering one or more quantum sources of the source module to produce one or more photons entangled with their respective source qubits;
  - Routing the entangled photons to the entangling module, using the crossing network module, where the interferometer is set to implement only local gates (preferably the identity permutation) so that no additional entanglement is generated and each quantum source is then independently measured by the detectors by measuring the entangled photons;
  - Measuring, using the plurality of detectors of the entanglement module, the photons that are entangled with the respective source qubits so that the photon measurement outcome provides an indirect measurement of the state of the source qubits;
  - Receiving the measurements by the classical controller from the entanglement module;
  - Processing the received measurement by the classical controller;
  - Proceeding according to a first predetermined set of instructions;

- An entanglement step comprising at least the following sub-steps:

▪ Triggering one or more quantum sources of the source module to produce one or more photons entangled with their respective source qubits;

▪ Routing the entangled photons to the entangling module, using the crossing network module, where the interferometer is set to implement an entangling transformation;

▪ Measuring, using the plurality of detectors of the entanglement module, the photons, and at least one outcome projects one or more source qubits onto an entangled state;

▪ Receiving the measurements by the classical controller from the entanglement module;

▪ Processing the received measurement by the classical controller;

▪ Proceeding according to a second predetermined set of instructions;

• A local operation step comprising at least the following sub-steps:

▪ Triggering the source module to apply a predetermined set of single-qubit gates on one or more source qubits.

At least some of the steps of the operation being configured to be executed simultaneously, preferably so long as no source is involved in two steps at the same time; and/or

The steps of the operation phase being configured to be executed in any order and/or repeated and/or executed in an order configured to change during the execution of one or more steps based on a predetermined set of rules.

According to another aspect, the present invention relates to a computer program product for generating entangled states of a plurality of sources using at least one system according to the present invention which, when executed on at least one processing unit, executes the method according to the present invention.

According to another aspect, the present invention relates to a non-volatile memory comprising at least one computer program product according to the present invention.

According to another aspect, the present invention relates to the use of the method of the present invention to execute a series of quantum computation steps and/or to process at least one quantum data using at least one predetermined graph state generated by a system according to the present invention executing a method according to the present invention.

Before providing below a detailed review of embodiments of the invention, some optional characteristics that may be used in association or alternatively will be listed hereinafter:

According to an example, the classical controller is configured to control indirectly the source module using the pulse module.

According to an example, the classical controller is configured to control directly the source module using electrical signals.

According to an embodiment, the pulse module is configured to control directly and/or indirectly one or several modules of the present invention.

According to an example, the pulse module is configured to control at least one switch of the plurality of switches.

According to an example, the linear-optical transformation device comprises at least one interferometer.

According to an example, the interferometer is a reconfigurable interferometer.

According to an example, the classical controller further comprises at least:

a. A first input configured to receive classical information from at least one classical information processing module

b. A second input configured to receive at least one measurement from at least one detector of the plurality of detectors;

c. A first output configured to send instructions to the pulse module;

d. A second output configured to send instructions to the switches of the plurality of switches of the source module;

e. A third output configured to send instructions to the interferometer of the entanglement module;

f. A fourth output configured to send instructions to the switching network sub-module of the multiplexing module;

g. A fifth output configured to send classical information about the states of the produced qubits.

According to an example, the pulse module further comprises at least:

a. A first input configured to receive instructions from the classical controller, and being connected to the first output of the classical controller;

b. At least a plurality of outputs configured to send at least one sequenced pulsed laser beam to the source module;

According to an example, the source module further comprises:

a. At least one plurality of inputs, each input of the plurality of inputs being associated with at least one quantum source of the plurality of quantum sources, each input of the plurality of inputs being connected to at least one output of the plurality of outputs of the pulse module, and configured to receive at least one sequenced pulsed laser beam;

b. At least one quantum source of the plurality of quantum sources comprises at least one output connected to at least one switch of the plurality of switches and configured to send at least one photon; preferably the remaining quantum sources being connected to the entanglement module.

According to an example, each switch of the plurality of switches comprises at least one first input connected to at least one output of at least one quantum source of the plurality of quantum sources and configured to receive at least one emitted photon from at least one quantum source of the plurality of quantum sources.

According to an example, each switch of the plurality of switches comprises at least one first input connected to the classical controller and configured to receive instruction from the classical controller.

According to an example, each switch of the plurality of switches comprises at least a first output and a second output, the first output being connected to the first direction and the second output being connected to the second direction.

According to an example, the crossing module further comprises :

    a. At least a plurality of inputs, each input of the plurality of inputs being connected to at least one output of the plurality of switches, each input of the plurality of inputs being configured to receive at least one photonic qubit;

    b. At least a plurality of outputs comprising a first group of outputs and a second group of outputs, the first group of outputs being configured to output the photonic qubits of the first group of photonic qubits and the second group of outputs being configured to output the photonic qubits of the second group of photonic qubits;

According to an example, the multiplexing module further comprises at least:

    a. A first input configured to receive instructions from the classical controller and being connected to the fourth output of the classical controller; Preferably, the first input is comprised by the switching network sub-module;

    b. A plurality of inputs, each input of the plurality of inputs being connected to at least one output of the second group of outputs of the crossing module and configured to receive the photonic qubits of the second group of photonic qubits;

    c. A plurality of outputs, each output of the plurality of outputs being configured to send at least one photonic qubit of the second group of photonic qubits to the predetermined output of the system;

According to an example, the entanglement module further comprises at least:

    i. A first input configured to receive instructions from the classical controller and being connected to the third output of the classical controller; Preferably, the first input is comprised by the interferometer;

    ii. A plurality of inputs, each input of the plurality of inputs being connected to at least one output of the first group of outputs of the crossing module and configured to receive the photonic qubits of the first group of photonic qubits;

    iii. At least one output configured to send at least one measurement from at least one detector of the plurality of detectors to the classical controller, and connected to the second input of the classical controller.

According to an example, the pulse generation module further comprises at least one pulse shaper configured to shape the pulsed laser beam to a predetermined shape.

According to an example, the pulse generation module further comprises at least one pulse splitter configured to split the pulsed laser beam into the plurality of pulsed laser beams.

According to an example, the pulse sequencer is configured to sequence each pulsed laser beam of the plurality of pulsed laser beams according to a predetermined order.

According to an example, the pulse sequencer configured to control the laser to generate a stream of laser beams comprising a plurality of laser beams;

According to an example, each quantum source of the plurality of quantum sources comprises at least one quantum emitter.

According to an example, each quantum source of the plurality of quantum sources further comprises:

    a. At least one beam splitter
    b. At least one filter

According to an example, the quantum emitter is taken among at least:

    a. A quantum dot
    b. A solid-state point defect
    c. An atom
    d. A molecule
    e. A trapped ion

According to an example, each switch of the plurality of switches comprises at least one interferometer.

According to an example, the interferometer of each switch of the plurality of switches comprises at least one Mach-Zehnder interferometer.

According to an example, the interferometer comprises:

a. At least one phase shifter
b. At least one beamsplitter

According to an example, the crossing network module is configured to route each photonic qubit coming from the source module into the first group or the second group.

According to an example, the multiplexing module further comprises at least one synchronization network sub-module configured to organize the photonic qubits of the second group to be processed by at least one switching network sub-module.

According to an example, the entanglement module further comprises at least one synchronization network sub-module configured to organize the photonic qubits of the first group, preferably within the entanglement module.

According to an example, the synchronization network sub-module is configured to apply a spatial synchronization on at least one photonic qubit of the second group by applying permutations.

According to an example, said permutations is implemented by at least one among:

a. Physically exchanging optical fiber outputs
b. A Mach-Zehnder interferometer
c. A reconfigurable interferometer

According to an example, the synchronization network sub-module is configured to apply a time synchronization on at least one photonic qubit of the second group by applying at least one delay on at least one photonic qubit of the second group.

According to an example, said delay is applied using at least one among:

a. At least one fiber delay line
b. At least one quantum memory
c. At least one wave guide delay line
d. At least one free-space delay line

According to an example, each photonic qubit of the first group comprises one single photon, and wherein the interferometer of the entanglement module comprises:

a. At least a first beam splitter layer comprising a first plurality of beam splitters, each beam splitter of the plurality of beam splitters comprising at least a first output and a second output, the first beam splitter layer being configured to apply at least one single qubit gate to each photonic qubit of the first group of photonic qubits;
b. At least one phase shifter layer configured to apply at least one phase gate to each single photonic qubit of the first group of photonic qubits;
c. At least one permutation layer configured to apply at least one permutation between at least two second outputs of at least two beam splitters of the first plurality of beam splitters;
d. At least a second beam splitter layer comprising a second plurality of beam splitters, each beam splitter of the second plurality of beam splitters comprising at least a first output and a second output, the second beam splitter layer being configured to apply at least one linear-optical transformation on at least one single photon coming from the permutation layer.

According to an example, the permutation layer is configured to apply the identity permutation between at least two second outputs of at least two beam splitters of the first plurality of beam splitters.

According to an example, the interferometer of the entanglement module and the plurality of detectors of the entanglement module are on the same photonic integrated circuit.

According to an example, the present invention is configured to generate at least one entangled graph state using the first group of photonic qubits.

According to an example, the entangled graph state is an entangled state of photonic qubits from the second group of photonic qubits.

According to an example, the source qubit is a spin qubit, and the entangled graph state is an entangled state of spin qubits.

According to an example, the source module is configured to:

a. To produce at least one photonic qubit configured to measure the state of at least one source qubit; and/or
b. To produce at least one photonic qubit configured to establish entanglement with at least one other source qubit; and/or
c. To produce photonic qubits configured to be processed and released from the system;

According to an example, the constraints of the set of predetermined constraints further comprises at least:

a. A maximum generation time steps, $\tau_{max}$, and/or
b. A predetermined success probability, $p_s$ after a specified number of time steps $\tau$

According to an example, the predetermined graph state $G_p$ of qubits is configured to be used in quantum computation, preferably in fusion-based quantum computation and/or for measurement-based quantum computation.

According to an example, each step of the construction process is configured to use a decision-making set of rules, this decision-making set of rules being based on 3 possible outputs of a Repeat-Until-Success gate and on the current state of the graph under construction along with instructions about how to proceed after any gate failures, the 3 possible outputs comprising success, failure and loss of a quantum information.

According to an example, the first predetermined set of instructions comprises at least:

a. Attempting a measurement step again for one or more quantum sources whose measurements were inconclusive; and/or
b. Moving to a local operation step for one or more quantum sources whose measurements indicate their source qubit state is correct up to a local gate; and/or
c. Moving to the next available step in the construction process.

According to an example, the second predetermined set of instructions comprises at least:

a. Attempting another entanglement step for one or more quantum sources whose associated photonic qubit measurements were successful but indicated only local gates were applied; and/or
b. Moving to a local operation step for one or more quantum sources whose associated photonic qubit measurements indicate the correct entangling gate was applied up to local gates on one or more source qubits; and/or
c. Partially aborting the construction for one or more quantum sources whose associated photonic qubit measurements were inconclusive; reverting to an earlier step in the construction process or an alternative predetermined branch of the construction process that accounts for the inconclusive entanglement step; and/or
d. Moving to the next available step in the construction process for one or more quantum sources whose associated photonic qubit measurements were successful and indicated the correct entangling gate was applied;

According to an example, the construction process comprises at least one tree of steps organized into a plurality of branches, each branch of the plurality of branches corresponding an alternative series of steps to be followed to construct the predetermined graph state.

According to an example, in the event of at least one gate failure or inconclusive measurement while executing a series of steps of one branch of the plurality of branches, selecting a different branch among the plurality of branches to be followed to construct the predetermined graph state.

According to an example, the entanglement step further comprises a permutation sub-step, the permutation sub-step comprises a plurality of cycles, each cycle has an associated measurement outcome taken among the following:

a. Success outcomes configured to trigger the controller to move to the next available step in the construction process;
b. First failure (repeat) outcome configured to trigger the controller to retry an entanglement step including the same cycle;
c. Second failure (erasure) outcomes configured to trigger the controller to revert to an earlier step in the construction process or a different branch of the construction process that accounts for the erasure of one or more previously-succeeded entangling operations.

According to an example, a predetermined set of single-qubit gates is configured to be modified based on previous measurements according to a third predetermined set of instructions, and preferably based on at least one branch of the plurality of branches.

According to an example, the construction phase further comprises an emission step comprising at least the following sub-steps:

a. Configuring by the classical controller:

i. one or more switches of the plurality of switches to route a plurality of photons to the multiplexing module, or
ii. one or more sub-switches of the plurality of sub-switches to route the photons to at least one predetermined output.

b. Once the configuration is complete, controlling, by the classical controller, the pulse module to trigger one or more quantum sources to emit one or more photons to be released from the system.

According to an example, at least one of the detectors comprises a threshold detection unit, said threshold detection unit is configured to send at least one classical data indicating the detection of at least one photon when the measure of the photon detector exceeds a predetermined threshold.

According to an example, at least one of the photon detectors is a threshold detector and is configured to send at least one classical data indicating the detection of at least one photon.

According to an example, at least one of the photon detectors comprises a photon number resolving detection unit, said photon number resolving detection unit is configured to send at least one classical data indicating the detection of at least one photon when the measure of the photon detector exceeds a predetermined number.

According to an example, said linear interferometer is configured to execute at least one repeat-until-success scheme.

Brief description of the drawings

The aims, objects, as well as technical features, and advantages of the invention, will emerge better from the detailed description of an embodiment of the invention which is illustrated by the following figures in which:

- Figure 1 schematically illustrates a graph state.
- Figure 2 schematically illustrates another graph state.
- Figure 3 schematically illustrates the generation of a graph state using entangled single photons according to an embodiment of the present invention.
- Figure 4 schematically illustrates the generation of a graph state according to an embodiment of the present invention.
- Figure 5 schematically illustrates the generation of a graph state using two quantum sources per node of the source qubit graph according to an embodiment of the present invention.
- Figure 6 schematically illustrates the generation of a graph state using two quantum sources per node of the source qubit graph and a reconfigurable interferometer of the entanglement module according to an embodiment of the present invention.
- Figure 7 schematically illustrates the generation of a graph state using multi-qubit gates according to an embodiment of the present invention.
- Figure 8 schematically illustrates the generation of a graph state using sub-graphs according to an embodiment of the present invention.
- Figure 9 schematically illustrates a system according to an embodiment of the present invention.
- Figure 10 schematically illustrates a classical controller according to an embodiment of the present invention.
- Figure 11 schematically illustrates a pulse module according to an embodiment of the present invention.
- Figure 12 schematically illustrates a source module according to an embodiment of the present invention.
- Figure 13 schematically illustrates a quantum source according to an embodiment of the present invention.
- Figure 14 schematically illustrates a crossing network module according to an embodiment of the present invention.
- Figure 15 schematically illustrates a multiplexing module according to an embodiment of the present invention.
- Figure 16 schematically illustrates an entanglement module according to an embodiment of the present invention.
- Figure 17 schematically illustrates an implementation of a synchronization sub-module according to an embodiment of the present invention.
- Figure 18 schematically illustrates another implementation of the synchronization sub-module according to an embodiment of the present invention.
- Figure 19 schematically illustrates an interferometer according to an embodiment of the present invention.
- Figure 20 schematically illustrates the interferometer with additional details according to an embodiment of the present invention.
- Figure 21 schematically illustrates a flowchart of a method according to an embodiment of the present invention.
- Figure 22 schematically illustrates a compilation phase according to an embodiment of the present invention.
- Figure 23 schematically illustrates a compilation phase according to an embodiment of the present invention.
- Figure 24 schematically illustrates a local complementation step according to an embodiment of the present invention.
- Figure 25 schematically illustrates an example of a repeat-until-success gate according to an embodiment of the present invention.
- Figure 26 schematically illustrates a resource-state generator according to an embodiment of the present invention.
- Figure 27 schematically illustrates four different sources of quantum photonic states according to an embodiment of the present invention.
- Figure 28 schematically illustrates three different schemes for constructing a Shor-encoded (2,2) 6-ring resource state according to an embodiment of the present invention.
- Figure 29 illustrates a table representing performance bounds to generate a Shor-encoded (2,2) 6-ring resource state with the proposed architectures.
- Figure 30 illustrates a table representing a summary of the relevant quantities describing the multiplexing stages of the proposed all-photonic scheme to building a Shor encoded (2,2) 6-ring resource state.
- Figure 31 illustrates a table representing a summary of the relevant quantities describing the multiplexing stages of the proposed caterpillar scheme to building a Shor encoded (2,2) 6-ring resource state.

The drawings are given by way of example and do not limit the invention. They constitute representations of principles intended to facilitate understanding of the invention and are not necessarily on the scale of practical applications.

Detailed description

The present disclosure is here described in detail with reference to non-limiting embodiments illustrated in the drawings.

In the context of the present invention, "Quantum computing" refers to a field of computation that exploits quantum mechanical phenomena to perform computations using quantum bits called qubits. It is necessary to introduce a qubit, which is a basic unit of quantum information. A qubit represents a physical system that may be in two different states, generally denoted by $|0\rangle$ and $|1\rangle$, as well as in a superposition of those two states, e.g., $(|0\rangle+|1\rangle)/\sqrt{2}$.

As well known by the skilled person in the relevant art (see for example "Fault-tolerant quantum computation with constant error", Aharonov, Dorit and Ben-Or, Michael, Proceedings of the twenty-ninth annual ACM symposium on Theory of computing, 176--188 (1997), a fault-tolerant quantum computer (FTQC) is a quantum computer that has a built-in resistance to physical errors, i.e. a built-in mechanism configured to correct physical errors. Errors are identified by measuring stabilizer operators which depend on the quantum error correcting (QEC) code being used, for example, these stabilizer operators can be implemented by quantum gates, as discussed hereafter.

In an FTQC, quantum gates can be implemented fault-tolerantly using different strategies depending on the quantum error-correcting code being used.

As well known by the skilled person in the relevant art (see for example "Layered Architecture for Quantum Computing", N. Cody Jones et al., Phys. Rev. X 2, 031007, a quantum computing architecture is the association of a theoretical model for quantum computing (such as gate-based, measurement-based, ancilla-driven or adiabatic quantum computing) together with the organization of the hardware components that enables the implementation of this quantum computing model. Therefore, a FTQC architecture is a quantum computing architecture that exploits the fault tolerance properties of QEC. For a FTQC architecture, arbitrarily large quantum computation can be run even when the hardware components have some number of imperfections that induce noise in the computation.

As described hereafter, a quantum emitter, also called a quantum source, with a given degree of freedom can emit photons that are entangled with this degree of freedom, such as a spin for example or more generally with a source qubit. Each photon can be routed, using a photon router for example, to be interfered with, using a linear interferometer for example, another photon and then detected, using photon detectors, using a threshold or photon number resolving method for example. The interferometer can be chosen such that the correct detection pattern corresponds to an entangling gate between the quantum emitters of two photons for example, and that allows the use of a repeat-until-success scheme. The entangling gate is repeated until success or until a photon is lost denoting a failure or until the trial is aborted for other reasons. Advantageously, the entangled photon emission can be used to measure the quantum emitter's state.

As well known by the skilled person in the relevant art, unitary gates represent invertible transformations in quantum mechanics, they preserve the wave function's norm and thus conserve probabilities of measurement outcomes. Mathematically, they can be represented as square complex matrices, verifying that the complex conjugates of their transpose matrices (Hermitian conjugates) are also their inverse matrices. In quantum computing, unitary gates act on the qubits' states, and they are fundamental building blocks for quantum circuits. In particular, single qubit gates are unitary gates acting on a single qubit independently of other qubits' state, and entangling gates are unitary gates acting on at least two qubits and that cannot be separated into separate single qubit gates.

As well known by the skilled person in the relevant art, RUS gates were invented for measurement-based quantum computation (MBQC) and to produce resource states used in this computing paradigm. A resource state is a specific entangled state of qubits, used for a specific purpose, generally a quantum computation, in the MBQC paradigm. In this MBQC paradigm, the quantum computation is carried out by performing single qubit measurements on a resource state.

Another well-known paradigm called the fusion-based quantum computation (FBQC) paradigm, consists of performing two-qubit measurements on multiple resource states. In this FBQC paradigm, RUS gates have been envisioned for producing the resource state. However, all proposals to produce photonic resource states for MBQC or FBQC using interacting emitters have thus far focused on minimizing the number of emitters or the number of entangling gates without considering photon loss from the design point. However, RUS gates fail in the presence of photon loss and thus are not deterministic but instead are near-deterministic. The present invention seeks to overcome this problem.

The present invention provides a technical advantage in implementing such RUS gates since they are only applied prior to the emission of any photons composing a photonic resource state. This ensures that photon loss only impacts the generation rate of the resource state and does not impart loss on the resource state itself. Thus, unlike previous implementations, the generation of resource states is loss tolerant.

In the context of the present invention, a "gate" or "quantum gate" may refer to a fundamental operation applied to one or more qubits that changes their quantum state. These gates operate according to the principles of quantum mechanics, such as superposition, entanglement, and interference. Mathematically, quantum gates are represented as unitary matrices, meaning their operations are reversible and preserve the total probability of the system. When applied to qubits, they transform the state vector in the complex Hilbert space, enabling quantum computations. Quantum gates can come in various types, each with specific roles. Single-qubit gates act on individual qubits to manipulate their states. Two-qubit gates, on the other hand, operate on pairs of qubits and are useful for generating entanglement.

In the context of the present invention, a "Gate error" may refer to inaccuracies during the execution of quantum gates, caused by factors like environmental disturbances, qubit fabrication imperfections, or control mechanism errors, for example. These errors may impact the fidelity and reliability of quantum computations.

In the context of the present invention, "Gate fidelity" may refer to the accuracy of quantum gates in performing their tasks, comparing the ideal operation with the actual implementation.

In the present description, the words "data", "piece of information" and "information" can be used for the same purpose, i.e. one data can be or comprise information or a piece of information, and a piece of information can be or comprise a data.

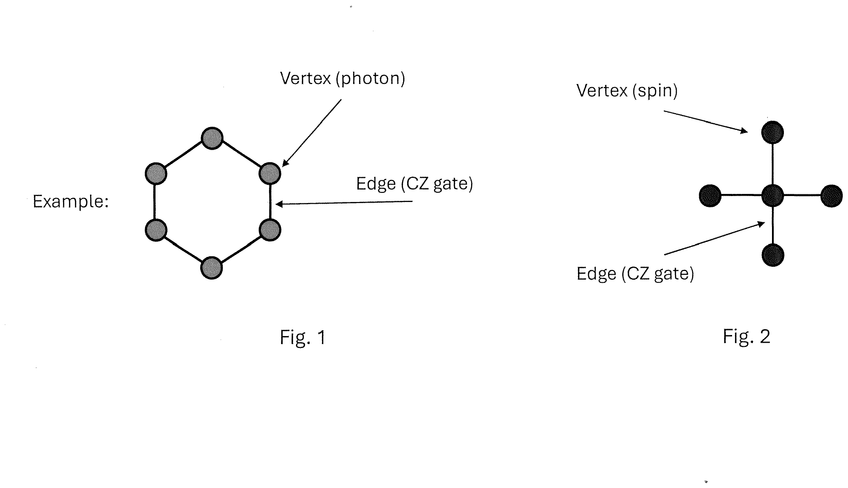

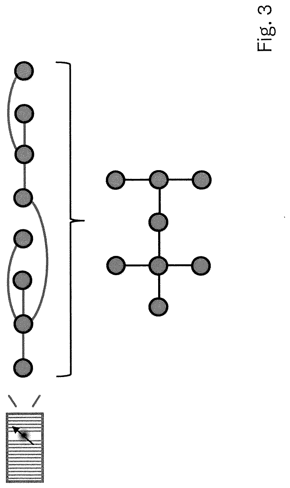

In the context of the present invention, and in quantum computing, a graph state is a special type of multi-qubit state represented by a graph. As illustrated by figures 1, and 2, each qubit corresponds to a vertex, with edges linking interacting qubits. Graph states conveniently represent certain entangled states as illustrated by figure 3. Graph states are useful in quantum error-correcting codes, entanglement measurement and purification, and characterizing computational resources in measurement-based quantum computing models, for example.

In the present description, one module can comprise several modules, one module can be formed of several modules.

According to an embodiment, the present invention can be configured to cooperate with at least one input module including one or more user interface devices such as a keyboard, pointer, number pad, or touch screen.

In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Classical data can include processor executable instructions that, when executed by a processor cause the processor to control, initialize, write to, manipulate, read out, and/or otherwise send data to/from a quantum module. Classical data can also include data used or obtained by the operation of the present invention. Classical data can include data associated with, e.g., created by, referred to, changed by, a processor executing processor-executable instructions, such as, control instructions.

A quantum data module can include one or more qubits.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

In the context of the present specification, "device" or "unit" may refer to any computer hardware that is capable of running software appropriate to the relevant task at hand. Thus, some (non-limiting) examples of devices include personal computers (desktops, laptops, netbooks, etc.), smartphones, and tablets, as well as network equipment such as routers, switches, and gateways. It should be noted that a device acting as a device in the present context is not precluded from acting as a server to other devices. The use of the expression "a device" does not preclude multiple devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" or "module" is meant to include software (appropriate to a particular hardware context) that is both necessary and sufficient to achieve the specific function(s) being referenced.

In the context of the present specification, the expression "computer readable medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the module, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included. In some embodiments of the present invention, the processor can be a quantum processor comprising a plurality of qubits.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", can include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present invention may be of a greater complexity.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present invention.

The present invention, as described hereafter, relates to a system and method for generating near deterministic, loss-tolerant, resource-efficient entangled states of qubits.

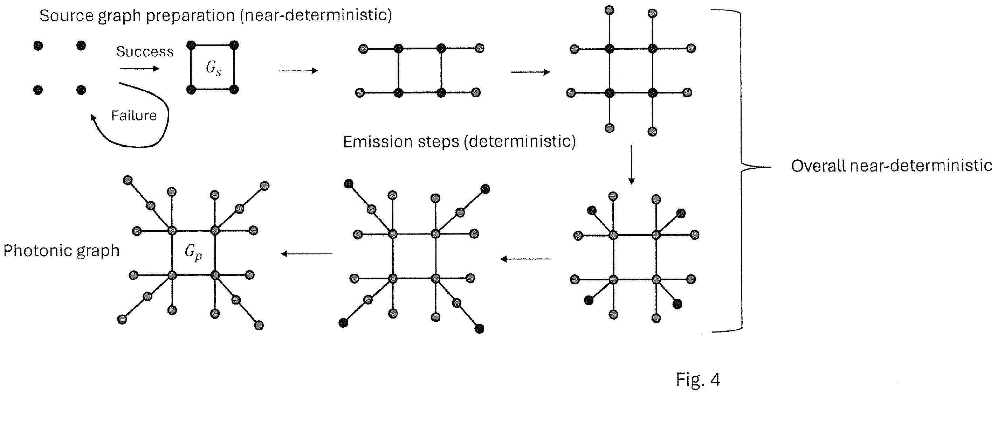

The present invention aims to produce resource states in a nearly deterministic manner and in particular to reduce the impact of photon loss. Figure 4 shows an example of generating a predetermined graph state using this invention. Quantum sources are entangled into a graph state before emitting photons, ensuring high success probability and allowing more time for RUS gates to operate. For example, if a photon is lost during graph generation, the affected section can be rebuilt before emitting the photonic state, eliminating the need for large-scale photonic multiplexing. Each photon advantageously only passes through a single 1x2 switch, routing photons either to entangle with other sources or release from the system, thus minimizing the number of optical components encountered by graph photons.

According to an embodiment of the present invention, the system may comprise a plurality of modules such as a classical controller, a pulse module, a source module, a crossing network, a multiplexing module, an entanglement module, etc... Preferably, the classical controller can be programmed to control some of these modules to produce a desired photonic entangled state, for example. The pulse module can, for example, take a classical command or instruction from the classical controller and output a corresponding laser pulse sequences, advantageously with minimal latency. The source module may be a register of quantum sources of single photons, preferably embedding a qubit memory. The crossing network may be configured to route photonic qubits to the correct modules, sub-modules, units, devices or outputs.

According to an embodiment, the multiplexing module can be configured to group qubits together as required by the instructions received from the classical controller, to reduce the optical depth of the switching network. For example, this configuration can be static during operation but can be implemented with fibers (for manual reconfiguration) or on chip with, for example, thermal phase shifters (programmable reconfiguration).

According to an embodiment, the entanglement module may be configured to actively route photonic qubits to provide adaptive connectivity between quantum sources and performs single-qubit and/or multi-qubit linear-optical transformations on the input qubits.

According to an embodiment, for the multiplexing module, the quantum sources that serve the same 'function' in the source graph can be organized to be next to each other. This allows switches to act locally on wires to sort the outgoing photons. For the entanglement module, for example, quantum sources that are connected can be organized as close to each other as possible. The 'distance' between connected quantum sources can be minimized.

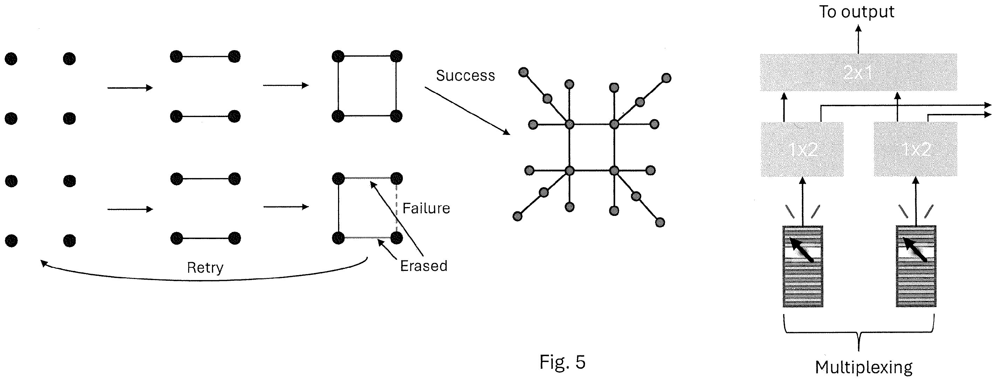

As shown in figure 5, to increase the rate of state generation on a periodic clock cycle, multiple source graphs can be constructed simultaneously. If one parallel attempt succeeds while another fails (or has not yet succeeded), the state can still be generated. Consequently, the waiting time can be minimized.

To further reduce the waiting time, the system can be configured to allow parallel constructions of a graph state to share resources, as described hereafter. To minimize the cost in time, the present invention is configured to implement at least four strategies: resource-sharing multiplexing, multiqubit gates, local complementation, and disconnected subgraphs.

According to an embodiment, resource-sharing multiplexing increases the rate of state generation on a periodic clock cycle by constructing multiple source graphs in parallel.

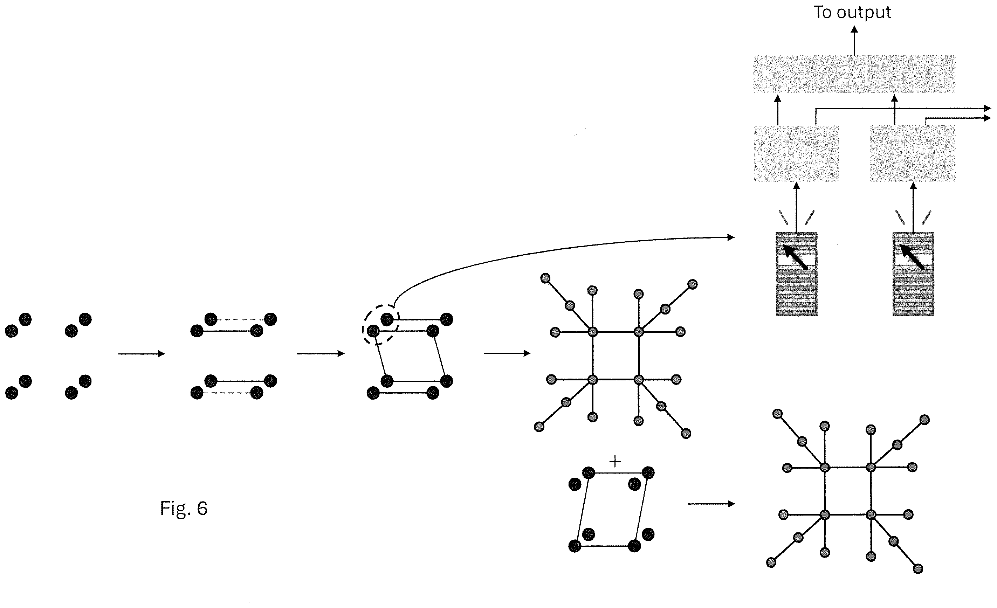

As illustrated in Figure 6, sharing resources among parallel constructions can reduce waiting time. The present invention enables the combination of successful steps from parallel attempts to proceed to the next step, preferably as soon as possible. Remaining resources continue construction to produce the next graph state.

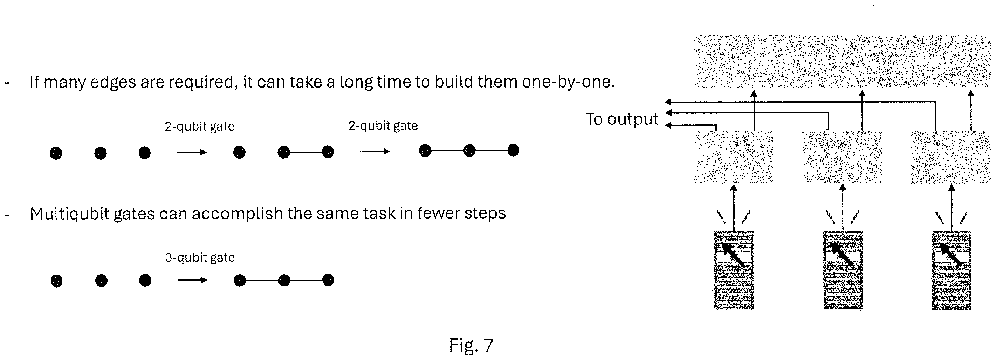

Multiqubit gates can accomplish the same task in fewer steps when many edges are required, see for example figure 7.

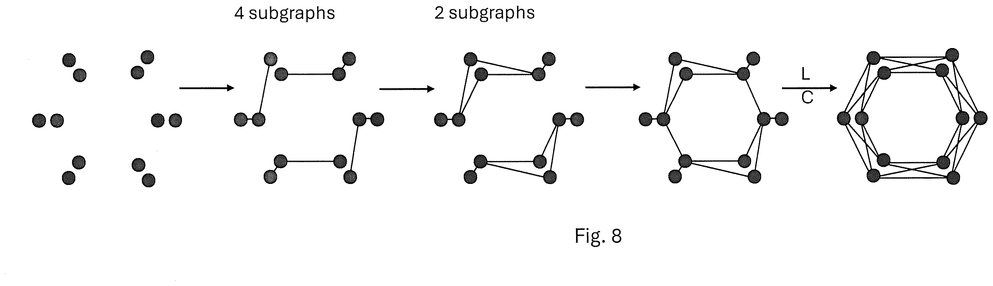

Preferably, local complementation (LC) applies local Clifford gates to transform graphs into complement graphs, some of which may be easier to construct; Advantageously, complement graphs that can be decomposed into stages of disconnected subgraphs are more robust to loss since failures only impact the subgraph where they occur (disconnected subgraphs), see for example figure 8.

According to an embodiment, the present invention is designed to ensure near-deterministic operation by entangling sources into a graph state prior to emitting any photons to the output of the system. This allows an arbitrarily high success probability to be ensured by waiting longer for the RUS gates to complete, as described hereafter. If a photon is lost during the source graph generation, the impacted section can be rebuilt before emitting the photonic state. Thus, no incomplete photonic states need to be emitted and large-scale photonic multiplexing is not necessary. Each photon can, for example, pass through a single switch that is used to route photons either to be used to entangle a quantum source with other quantum sources or to release the photon from the system. Thus, the number of optical components seen by graph photons is near zero.

When photon loss is considered, the time taken to generate the photonic graph state increases. Since time is a resource, and longer generation times reduce the rate that the states can be produced at, it is useful to also minimize the cost in time. This is overcome using these four strategies.

The system is particularly useful for quantum computing applications where high-fidelity entangled states are required. The near-deterministic operation, loss tolerance, and resource efficiency make it suitable for large-scale quantum networks and quantum simulations.

According to an embodiment, the present invention relates therefore to a system for generating entangled states of a plurality of quantum sources. Preferably, said plurality of quantum sources is configured to produce at least one plurality of entangled photonic qubits.

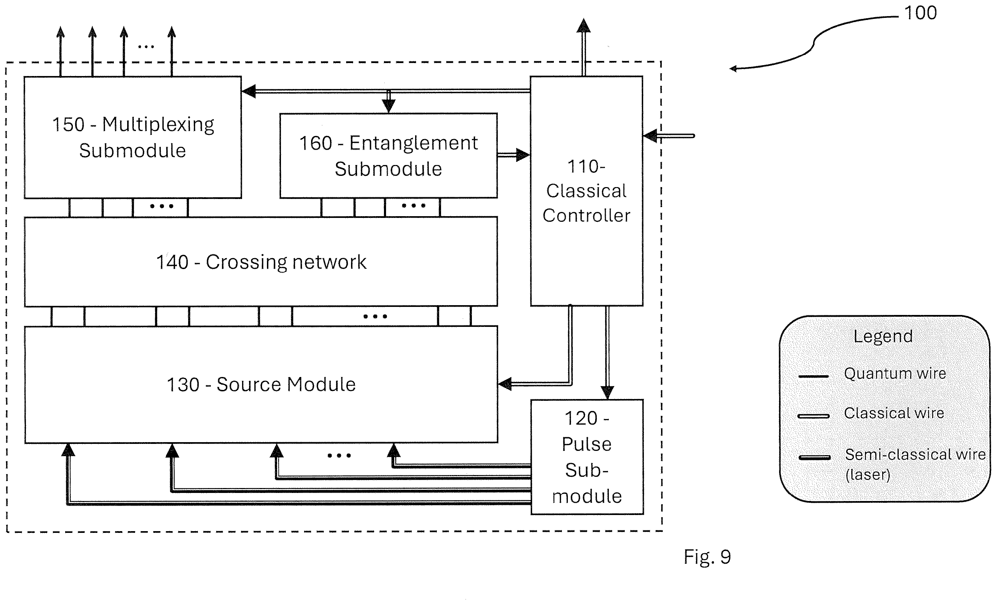

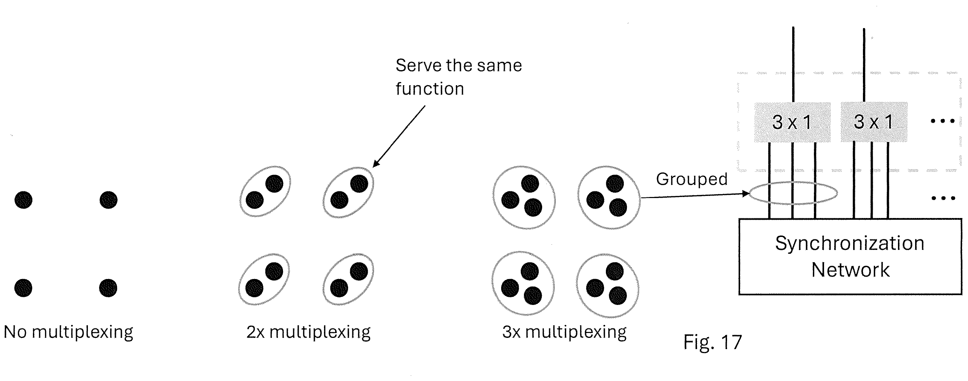

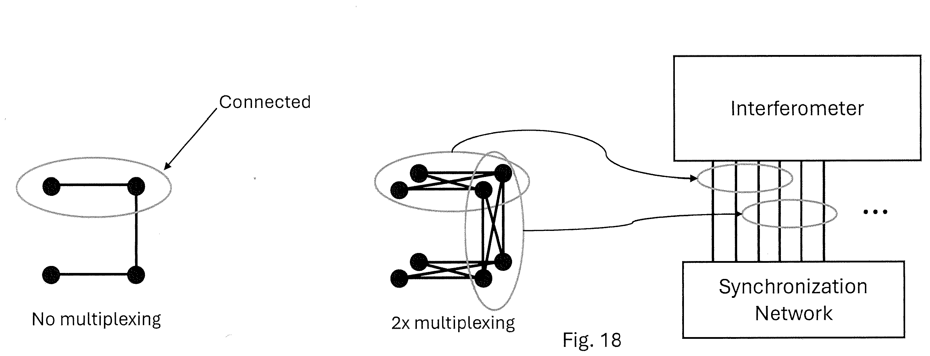

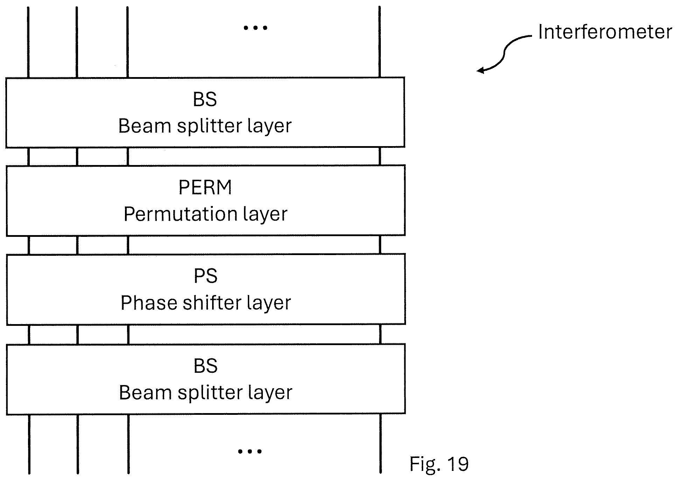

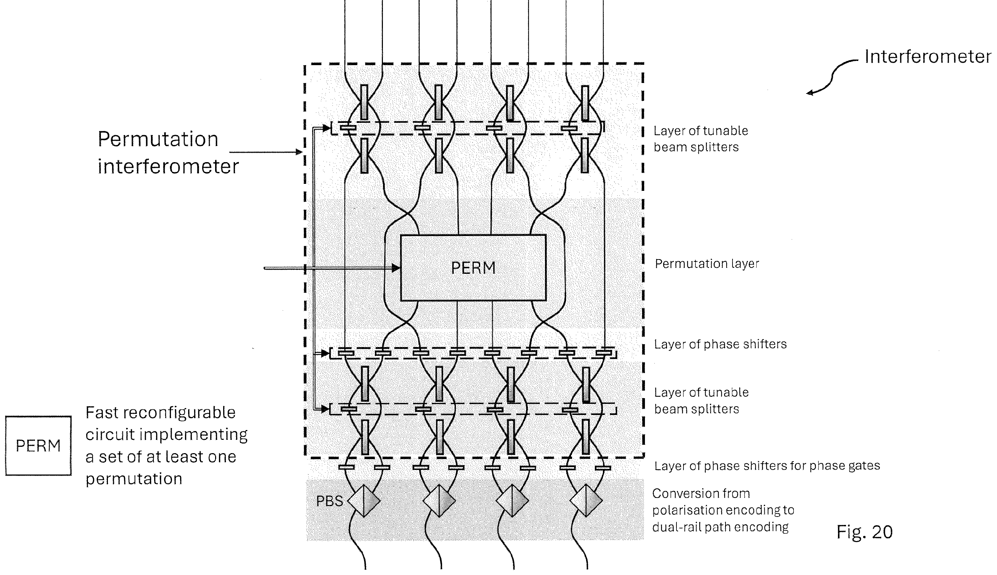

According to an embodiment, and as illustrated by figures 9 to 20, the system 100 comprises:

    a. At least one classical controller 110 configured to control, preferably in real-time, a plurality of modules taken among at least:

        i. Preferably, a pulse generation module 120;
        ii. A source module 130;
        iii. Preferably, a crossing network module 140
        iv. A multiplexing module 150;
        v. An entanglement module 160; and

    b. At least one pulse generation module 120 configured to control at least one laser beam; preferably the laser beam is configured to control at least one quantum source; Advantageously, the pulse generation module 120 comprises:

        i. At least one pulsed laser, preferably configured to emit at least one pulsed laser beam;
        ii. At least one pulse sequencer, preferably configured to sequence at least a plurality of pulsed laser beams, advantageously according to a predetermined order;
        iii. At least one classical switch, preferably configured to receive at least one instruction, preferably in real-time, from the classical controller 110, advantageously to output or block at least one sequenced pulsed laser beam of the plurality of sequenced pulsed laser beams;

    c. At least one source module 130, preferably configured to generate a plurality of photonic qubits; advantageously, the source module 130 comprises:

        i. At least one plurality of quantum sources comprising:

            o at least one quantum source, preferably comprising at least one source qubit, and being configured to produce at least one photonic qubit, advantageously by emitting at least one photon entangled with its source qubit, and
            o preferably, at least one other quantum source, preferably being configured to produce at least one photonic qubit, advantageously by emitting at least one photon;

        ii. At least one plurality of switches; each switch of the plurality of switches being preferably configured to output at least one photon according to a first direction or a second direction; Advantageously, at least one quantum source of the plurality of quantum sources is associated with at least one switch of the plurality of switches; Preferably, some quantum sources may be routed directly to at least one entanglement module 160;

    d. At least one crossing network module 140, preferably configured to create a first group of photonic qubits and a second group of photonic qubits, advantageously the photonic qubits of the first group being configured to establish entanglement with at least one other quantum source, and the photonic qubits of the second group being configured to be processed and released from the system;

    e. At least one multiplexing module 150, preferably configured to address at least one photonic qubit to at least one predetermined output of the system 100, advantageously at a predetermined time; for example, the multiplexing module 150 comprises:

i. Optionally, at least one synchronization network sub-module, preferably configured to organize the photonic qubits of the second group to be processed by at least one switching network sub-module:

ii. At least one switching network sub-module, preferably configured to route each photonic qubits of the second group to at least one predetermined output of the system, advantageously, the switching network sub-module comprising a plurality of sub-switches;

f. At least one entanglement module 160, preferably configured to apply at least one quantum gate on at least one quantum source of the photonic qubit of the first group by applying at least one quantum gate on at least one photonic qubit of the first group and, by measuring the state of said photonic qubit; advantageously, the entanglement module 160 comprises:

i. At least one interferometer, preferably configured to prepare at least one photonic qubit of the first group to be measured by at least one detector ;

ii. At least one plurality of detectors, preferably configured to measure the state of each photonic qubit coming from the interferometer, advantageously to determine if at least one quantum gate has been applied on at least one of their respective quantum sources.

According to an embodiment, the system is designed to produce at least one plurality of entangled photonic qubits in a near-deterministic, loss-tolerant, and resource-efficient manner.

According to an embodiment, the pulse generation module 120 is responsible for controlling at least one laser beam that, in turn, controls at least one quantum source. Preferably, the module 120 consists of at least one pulsed laser, a pulse sequencer, and a classical switch. Advantageously, the pulsed laser emits at least one pulsed laser beam, which the pulse sequencer arranges according to a predetermined order. Preferably, the switch receives instructions from the classical controller 110, advantageously in real-time, and outputs or blocks at least one sequenced pulsed laser beam as required.

According to an embodiment, the source module 130 generates a plurality of photonic qubits. Each quantum source within the source module 130 produces at least one photonic qubit by emitting at least one photon that is entangled with its respective source qubit. The number of quantum sources in each source can vary, with at least one source being associated with at least one switch. Some quantum sources may be routed directly to the entanglement module 160.

According to an embodiment, the system 100 also comprises a plurality of switches, each configured to output at least one photon according to a first direction or a second direction. Preferably, the photons are routed based on their association with specific quantum sources and switches.

According to an embodiment, the crossing network module 140 is employed to create two groups of photonic qubits: the first group is designed to establish entanglement with at least one other quantum source, while the second group is processed and released from the system 100. According to an embodiment, the system 100 is configured to cooperate with at least one classical computer and/or one quantum computer providing it with photonic qubits, preferably with the predetermined graph state. Advantageously, the predetermined graph state is configured to be used in at least one quantum computation step.

According to an embodiment, the multiplexing module 150 addresses each photonic qubit of the second group to a predetermined output of the system 100, preferably at a predetermined time. The multiplexing module 150 may comprise a synchronization network sub-module that organizes the photonic qubits of the second group for processing by the switching network sub-module. The switching network sub-module routes advantageously each photonic qubit of the second group to its respective output, using a plurality of sub-switches.

According to an embodiment, the entanglement module 160 applies at least one quantum gate on at least one quantum source of the first group by applying a corresponding quantum gate on at least one photonic qubit of the first group and measuring the state of said photonic qubit. The entanglement module 160 may also comprise at least one interferometer that prepares each photonic qubit of the first group for measurement by at least one detector of a plurality of detectors.

According to an embodiment, said plurality of detectors is employed to measure the state of each photonic qubit coming from the interferometer. Preferably, this determines if at least one quantum gate has been applied on its respective quantum source.

According to an embodiment, the system 100 is designed to increase the rate of state generation by employing several strategies. These include resource-sharing multiplexing, where multiple source graphs can be constructed in parallel to reduce waiting time; local complementation, which applies for example local Clifford gates to transform graphs into complement graphs that are easier to construct; and disconnected subgraphs, which decompose the desired graph into stages of disconnected subgraphs for increased robustness against loss.

According to an embodiment, the system 100 is configured to produce a predetermined photonic entangled state, preferably reachable within its specifications, and advantageously operates on a periodic clock cycle. The classical controller 110 may make low-latency decisions implementing a set of instructions to construct the predetermined photonic state, while the pulse module 120 outputs the corresponding laser pulse sequences, preferably with minimal latency. The source module 130 serves as a register of quantum sources of single photons, and the crossing network 140 routes photonic qubits to the correct module. The multiplexing 150 and entanglement 160 modules group qubits together as required by the set of instructions to reduce the optical depth of the switching network, with both modules including a permutation process that organizes the inputs coming from the quantum sources.

In summary, the present invention offers a system 100 for generating entangled states of a plurality of quantum sources in a near-deterministic, loss-tolerant, and resource-efficient manner.

Preferably, the system 100 may incorporate a quantum error correction mechanism to mitigate errors introduced during the computation process. Advantageously, the error correction mechanism may use additional qubits and specific operations to detect and correct errors in the quantum computations.

Now, we will describe, according to an embodiment, how these different modules can be connected to one another.

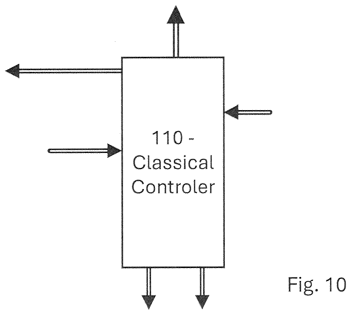

According to an embodiment, and as illustrated by figure 10, the classical controller 110 can comprise at least:

   a. A first input is configured to receive classical information from at least one classical information processing module.
   b. A second input is configured to receive at least one measurement from at least one detector of the plurality of detectors.
   c. A first output is configured to send instructions to the pulse module 120.
   d. A second output is configured to send instructions to the switches of the source module 130.
   e. A third output is configured to send instructions to the interferometer of the entanglement module 160.
   f. A fourth output is configured to send instructions to the switching network sub-module of the multiplexing module 150.
   g. A fifth output is configured to send classical information about the states of the produced qubits.

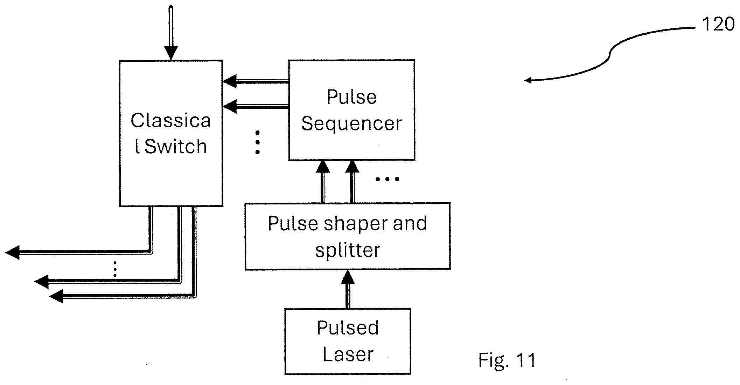

According to an embodiment, and as illustrated by figure 11, the pulse module 120 can comprise at least :

   a. A first input that receives instructions from the classical controller 110 and is connected to the first output of the classical controller 110.
   b. At least a plurality of outputs that send at least one sequenced pulsed laser beam to the source module 130.

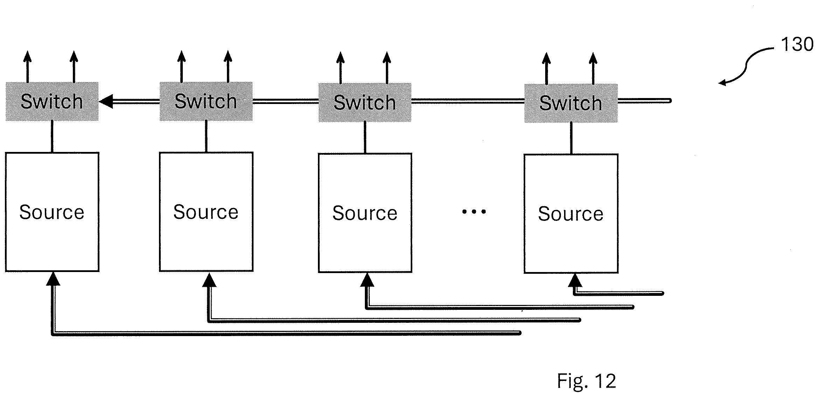

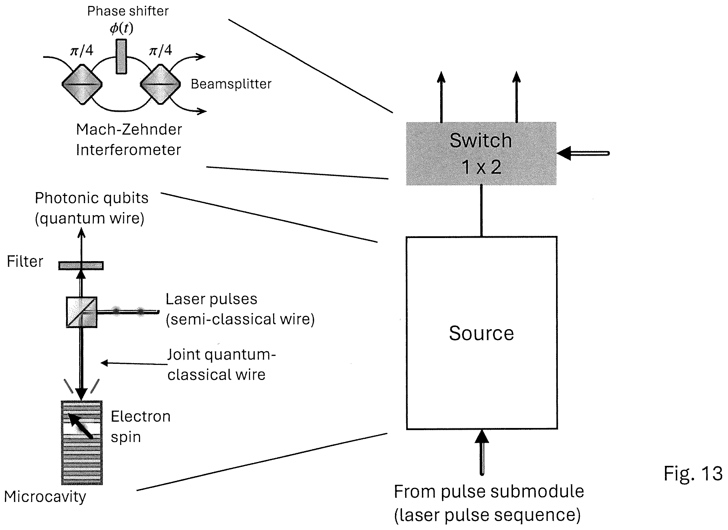

According to an embodiment, and as illustrated by figures 12 and 13, the source module 120 can comprise at least :

   a. At least one plurality of inputs, each input being associated with at least one quantum source and receiving at least one sequenced pulsed laser beam from the pulse module 120.
   b. At least one quantum source that sends at least one photon to at least one switch and is connected to at least one switch of the plurality of switches.
   c. Preferably, the remaining quantum sources are, advantageously directly, connected to the entanglement module 160.

According to an embodiment, and as illustrated by figures 12 and 13, each switch of the plurality of switches can comprise at least:

   a. At least one input connected to at least one output of at least one quantum source and configured to receive at least one emitted photon from at least one quantum source.
   b. At least one input connected to the classical controller 110 and configured to receive instructions from the classical controller 110.
   c. At least a first output and a second output, with the first output being connected to the first direction and the second output being connected to the second direction.

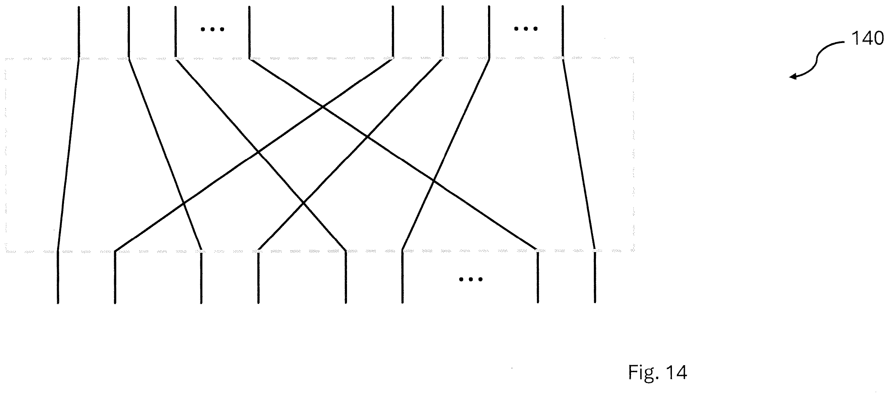

According to an embodiment, and as illustrated by figure 14, the crossing module 140 can comprise at least:

   a. At least a plurality of inputs that are connected to at least one output of the plurality of switches and configured to receive at least one photonic qubit.
   b. At least a plurality of outputs, with the first group of outputs being configured to output the photonic qubits of the first group and the second group of outputs being configured to output the photonic qubits of the second group.

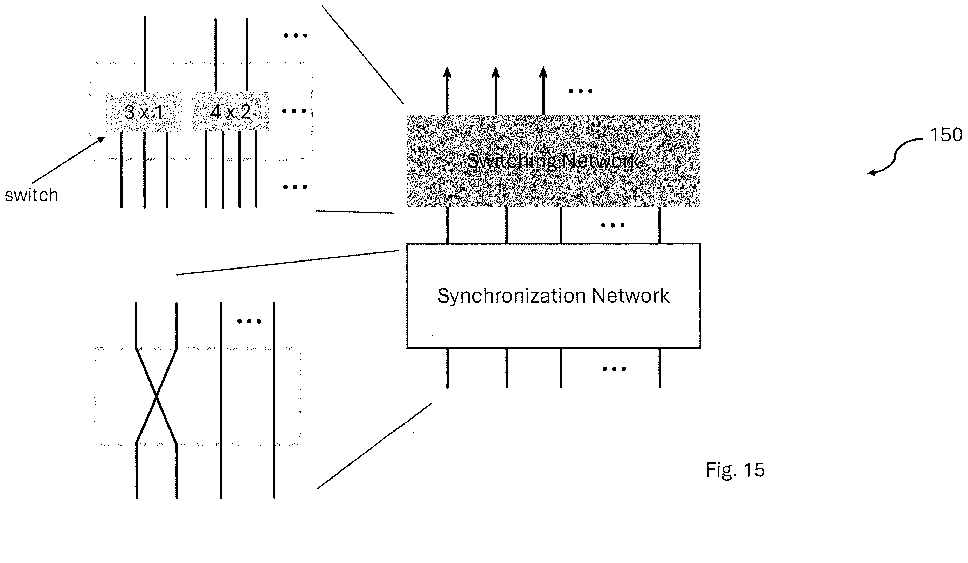

According to an embodiment, and as illustrated by figure 15, the multiplexing module 150 can comprise at least :

   a. A first input that receives instructions from the classical controller 110 and is connected to the fourth output of the classical controller 110, preferably comprised by the switching network sub-module.
   b. A plurality of inputs that are connected to at least one output of the second group of outputs of the crossing module and configured to receive the photonic qubits of the second group of photonic qubits.
   c. A plurality of outputs, each output being configured to send at least one photonic qubit of the second group of photonic qubits to the predetermined output of the system 100.

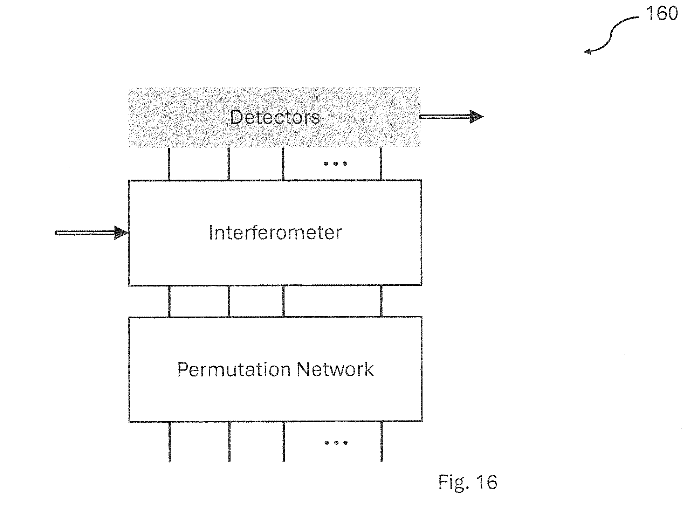

According to an embodiment, and as illustrated by figures 16 to 20, the entanglement module can comprise at least:

a. A first input that receives instructions from the classical controller 110 and is connected to the third output of the classical controller 110, preferably comprised by the interferometer.

b. A plurality of inputs that are connected to at least one output of the first group of outputs of the crossing module 140 and configured to receive the photonic qubits of the first group of photonic qubits.

c. At least one output that sends at least one measurement from at least one detector of the plurality of detectors to the classical controller 110, and connected to the second input of the classical controller 110.

According to an embodiment, some of these connections can be classical, i.e. the data sent and received are classical, while other can be quantum, i.e. the data sent and received are quantum. Finally, some of these connections can be semi-classical, i.e. a laser beam for example.

According to an embodiment, the pulse generation module 120 comprises at least one pulse shaper configured to shape the pulsed laser beam to a predetermined shape. According to an embodiment, the pulse shaper is designed to modify the temporal and/or spatial characteristics of the pulsed laser beam in order to achieve a predetermined shape. This modification can be achieved through various techniques well known by the skilled person in the art. Advantageously, the ability to shape the pulsed laser beam allows for a more precise control over the interaction between the laser and the quantum source, thereby improving the efficiency and accuracy of the control of the quantum source. Advantageously, the use of a pulse shaper in the pulse generation module 120 allows for greater flexibility in the design and operation of laser processes, enabling them to be tailored to specific requirements.

According to an embodiment, the pulse generation module 120 may further comprise at least one pulse splitter configured to divide the pulsed laser beam into a plurality of pulsed laser beams. Advantageously, the use of a pulse splitter allows for the generation of multiple pulsed laser beams. Preferably, the pulse splitter is an optical device that utilizes diffraction or reflection principles to divide the pulsed laser beam into the desired number of beams. According to an embodiment, the plurality of pulsed laser beams are configured to be directed to the plurality of quantum sources. According to an embodiment, the pulse splitter can be adjustable, allowing for the modification of the number of the resulting pulsed laser beams based on the requirements of the specific application, such as the number of quantum sources, for example.

According to an embodiment, the pulse generation module can comprise at least one pulse sequencer configured to sequence each pulsed laser beam of the plurality of pulsed laser beams according to a predetermined order. Advantageously, the pulse sequencer is designed to ensure precise and synchronized control over the timing and sequence of the pulsed laser beams.

According to an embodiment, each pulsed laser beam is a coherent light source that interacts with at least one source qubit. The predetermined order of the pulsed laser beams can be defined by the classical controller 110. Preferably, the pulse sequencer is connected to the classical controller 110 control unit that generates the predetermined order based on predetermined quantum operations. Advantageously, the pulse sequencer can be programmed to repeat the predetermined order multiple times, allowing for the execution of repetitive quantum operations. This feature is particularly useful in quantum algorithms that require many iterations of the same operation.

According to an embodiment, the pulse sequencer may include a timing circuit that controls the duration and interval between each pulse. The timing circuit ensures that the pulses are spaced appropriately to minimize interference between adjacent pulses and maintain the coherence of the pulsed laser beams. Preferably, the pulse sequencer is designed to handle a large number of pulsed laser beams, allowing for the simultaneous control of multiple source qubits. This feature enables the parallel execution of quantum operations, thereby increasing the computational power of the system 100.

According to an embodiment, the pulse sequencer is configured to sequence the emission of at least one laser, thereby generating a sequence of laser beams from one main laser beam, for example. Each laser beam in this sequence is an individual entity within the stream. The number of laser beams in the stream can vary. Advantageously, the pulse sequencer can be programmed to control the frequency, duration, and intensity of each laser beam emitted by the laser.

According to an embodiment, the pulse sequencer can be designed to operate in conjunction with a quantum memory module, i.e. the source module 130 for example, allowing for the storage and retrieval of quantum states associated with each laser beam.

According to an embodiment, a system comprises a plurality of quantum sources, each of which comprises at least one quantum emitter. Preferably, the plurality of quantum sources in the system is designed to emit quantum particles. Advantageously, the use of multiple quantum sources (1) allows for the generation of a larger number of qubits. Preferably, each quantum emitter is configured to emit quantum particles in a controlled manner, thereby ensuring the consistency and reliability of the quantum state. The system 100 may further include control mechanisms for managing the emission of quantum particles, i.e. single photons for example, from each quantum source, as well as for synchronizing the operation of multiple quantum sources when necessary.

As described, the system 100 may also comprise detection mechanisms for monitoring the emission of quantum particles from each quantum source, as well as for analyzing their properties, i.e. their states for example.

According to an embodiment, each quantum source from a plurality of quantum sources comprises:

> a. At least one beam splitter configured for dividing or combining the quantum particles' wave functions in two or more output channels. The beam splitter can be designed to have specific properties such as transmissivity and reflectivity, which are useful for controlling the quantum state of the particles, i.e. single-photons for example.
>
> b. At least one filter employed to selectively allow or block certain quantum states based on their properties, such as energy, momentum, or polarization. Filters can be designed to pass specific wavelengths, polarizations, or other characteristics of the quantum particles.

According to an embodiment, the quantum emitter can be selected from at least one of the following:

> a. A quantum dot: A nanoscale semiconductor structure exhibiting quantum confinement effects, characterized by its ability to emit light at specific wavelengths when excited, for example by a laser beam.
>
> b. A solid-state point defect: An imperfection in a crystal lattice structure of a solid material, which can act as a quantum emitter due to trapped electrons or holes.
>
> c. An atom: A fundamental structure that comprises a nucleus surrounded by electrons, capable of exhibiting quantum mechanical properties and serving as a potential quantum emitter when excited.
>
> d. A molecule: A group of atoms held together by chemical bonds, which can exhibit quantum mechanical properties and function as a quantum emitter under specific conditions.
>
> e. A trapped ion: An atom or molecule that has been captured and immobilized in an electromagnetic trap, allowing for precise manipulation and use as a quantum emitter.

The choice of the quantum emitter depends on various factors such as desired wavelength, emission efficiency, stability, and compatibility with surrounding systems. Preferably, the quantum emitter is chosen based on its ability to maintain coherence over extended periods, ensuring reliable operation in quantum systems.

According to an embodiment, each switch of the plurality of switches is configured to comprise at least one interferometer. According to the embodiment, the plurality of switches forms a quantum network, where each switch serves as a node for the transmission and manipulation of quantum states. Advantageously, the inclusion of an interferometer in each switch allows for the implementation of various quantum operations, such as phase shifts, beam splitting, and interference measurements, for example. Preferably, the interferometers are implemented using optical components, such as beam splitters, mirrors, and phase shifters, to manipulate the quantum states propagating through the network.

According to an embodiment, the interferometer in each switch is configured to perform a specific quantum operation based on the input quantum state and the control signals applied to the interferometer's components, preferably by the classical controller 110.

According to the embodiment, each interferometer is preferably a Mach-Zehnder interferometer. The Mach-Zehnder interferometer is a device that splits an input optical signal into two paths and recombines them after they have traveled different distances, thereby producing an interference pattern at the output. Preferably, the Mach-Zehnder interferometer comprises a beam splitter, two mirrors, and two input and output ports. The beam splitter splits the incoming optical signal into two paths, one of which travels through one mirror while the other travels through the other mirror before recombining at the beam splitter. Advantageously, the use of mirrors in the Mach-Zehnder interferometer allows for adjusting the path lengths of the two optical signals, thereby controlling the phase difference between them and thus the interference pattern at the output. Preferably, the input and output ports are used to inject and detect the photonic qubit, respectively. The input port receives the incoming photonic qubit, which is then split by the beam splitter. The output port collects the recombined photonic qubit after it has passed through the interferometer.

According to an embodiment, the interferometer comprises:

> a. At least one phase shifter configured to alter the phase of an input photonic qubit without significantly changing its amplitude or frequency. This allows for precise control over the interference patterns produced by the interferometer.
>
> b. At least one beamsplitter configured to split an incoming photonic qubits into two separate paths, while also combining two or more photonic qubits to produce a single output photonic qubit. This allows for the manipulation and measurement of interference patterns in the interferometer.

According to an embodiment, the crossing network module 140 is configured to manage and route photonic qubits originating from a source module 120. Preferably, the crossing network module 140 receives each photonic qubit emitted by the source module 120. Advantageously, the crossing network module 140 is equipped with a routing mechanism that directs each incoming photonic qubit into either the first group or the second group based on specific criteria. Preferably, the routing mechanism uses waveguide mode crossings or optical fibres to divert the photonic qubits into their respective groups. For example, the first group and the second group are further divided into multiple sub-groups or paths for subsequent processing. According to an embodiment, each group is designed to accommodate a specific number of photonic qubits, allowing for efficient management of quantum information.

The crossing network module 140 may comprise monitoring processes to ensure proper routing and maintain the integrity of the quantum state of the photonic qubits. Advantageously, the design of the crossing network module 140 allows for scalability, enabling the integration of more photonic qubits and groups as needed for larger-scale quantum computations.

According to an embodiment, the synchronization network sub-module is part of the multiplexing module 150. The synchronization network sub-module is configured to perform spatial synchronization on at least one photonic qubit belonging to the second group of qubits. Advantageously, the spatial synchronization is achieved by applying permutations. In other words, the order or position of the photonic qubits within the network is manipulated to achieve synchronization. Preferably, the permutations are applied in a manner that ensures the photonic qubits maintain their quantum state integrity throughout the process.

It is also advantageous that the synchronization network sub-module is capable of applying these permutations dynamically, allowing for real-time adjustments to maintain synchronization as the quantum state of the qubits evolves over time, thanks to the instruction received by the classical controller, for example.

According to an embodiment, the permutations can be implemented according to various techniques such as, for example:

> a. Physically exchanging optical fiber outputs: In this approach, the optical fibers are physically swapped to achieve a predetermined permutation. This can be achieved by manually or automatically swapping the positions of the output fibers.
> b. Mach-Zehnder interferometer: In this device, a beam of light is split into two paths by a beamsplitter, and then recombined at another beamsplitter. By adjusting the lengths or phases of these paths, the relative phase of the output can be controlled, effectively implementing a permutation on the quantum state.
> c. Reconfigurable interferometer: This device allows for the dynamic adjustment of the optical path lengths and phases, enabling the implementation of various permutations as needed.

The technical advantages of these implementations lie in their flexibility and adaptability to different quantum computing architectures. The physical exchange of optical fiber outputs provides a straightforward way, while the interferometers allow for more complex permutations to be implemented with precision. The reconfigurable interferometer offers an additional advantage by allowing for dynamic adjustment of the permutation scheme, making it particularly suitable for quantum algorithms that require adaptive or variable permutations.

According to an embodiment, the synchronization network sub-module is configured for time synchronization of at least one photonic qubit belonging to the second group. Advantageously, this synchronization is achieved by applying at least one delay on at least one photonic qubit of the second group. In more detail, according to an embodiment, the synchronization network sub-module receives instructions from the classical controller 110 that generates and manages the timing signals for the photonic qubits. For example, the classical controller 110 calculates the appropriate delays required for each photonic qubit in the second group based on the current state of the system 100 and a predetermined synchronization point. Preferably, the classical controller 110 communicates with other components of the system 100 to receive information about the status of the photonic qubits, such as their current phase or frequency or state. This information can be used by the classical controller to optimize the delays applied to the photonic qubits in the second group.

According to an embodiment, this delay can be implemented using at least one of the following components:

> a. A fiber delay line can be utilized. This component consists of a length of optical fiber that introduces a specific time delay based on its physical dimensions and the speed of light in the fiber. The fiber delay line can be designed to provide a precise and controllable delay, making it suitable for various applications requiring synchronization or timing adjustments.
> b. A quantum memory can also be employed. This component stores quantum states, allowing for the storage, retrieval, and manipulation of qubits. By using a quantum memory, the delay can also be controlled.
> c. A waveguide delay line can be used. This component is similar to a fiber delay line but uses a waveguide structure instead of an optical fiber. The waveguide delay line can offer advantages such as compactness, ease of integration with other components, and the ability to support multiple modes of light propagation.
> d. Furthermore, a free-space delay line can be implemented. This component introduces a delay by physically separating the optical signal in free space for a specific distance before recombining it. The free-space delay line is useful in applications where compactness is not a primary concern and where the delay needs to be adjustable over a wide range.

The use of fiber delay lines, quantum memories, waveguide delay lines, and free-space delay lines enables precise control over the delay.

According to an embodiment, the first group of photonic qubits comprises individual single photons. The interferometer of the entanglement module 160 can comprises several layers:

a. A first beam splitter layer, comprising a plurality of beam splitters. Each beam splitter in this plurality has at least two outputs a first output and a second output. This first layer is configured to apply at least one single qubit gate to each photonic qubit of the first group of photonic qubits.

b. A phase shifter layer, designed to apply at least one phase gate to each single photonic qubit of the first group of photonic qubits.

c. A permutation layer, configured to apply at least one permutation between at least two second outputs of at least two beam splitters from the first plurality of beam splitters.

d. A second beam splitter layer, comprising a second plurality of beam splitters. Each beam splitter in this second plurality also has at least two outputs a first output and a second output. This second layer is configured to apply at least one linear-optical transformation on at least one single photon coming from the permutation layer.

The use of individual single photons as qubits ensures minimal decoherence and loss, making the system suitable for implementing scalable quantum processes.

According to an embodiment, the permutation layer is configured to perform specific operations on the output states of the beam splitters. More specifically, the permutation layer may be configured to apply a permutation between at least two second outputs of at least two beam splitters of the first plurality of beam splitters. For example, the beam splitters are optical devices that combine or divide the incoming light into two separate paths, and in this case, they are used to manipulate the quantum states. The second outputs from each beam splitter represent the results of the operations performed by the corresponding beam splitters on the input states. The permutation layer may also be configured to apply the identity permutation to ensure that these results are maintained in their original states. Advantageously, these configurations allow for efficient manipulation and rearrangement of quantum states within the system 100.

According to an embodiment, the entanglement module 160 comprises an interferometer and a plurality of detectors, advantageously all integrated on a single photonic integrated circuit.

According to an embodiment, the entanglement module 160 is designed for entangling two or more photons in a quantum computing system.

Preferably, the interferometer is an optical device within the entanglement module 160 that splits and recombines photonic qubits, allowing for interference effects to occur.

Advantageously, a photonic integrated circuit is a solid-state device that integrates various photonic components such as waveguides, modulators, and detectors on a single chip.

Preferably, multiple photo-detectors within the entanglement module 160 are used to measure the output of the interferometer.

Advantageously, by integrating the interferometer and detectors on a single photonic integrated circuit, the system 100 achieves improved spatial alignment, reduced optical losses, and enhanced overall performance due to the miniaturization and integration of components. Additionally, this design allows for easier fabrication, assembly, and maintenance of the quantum entanglement module 160.

According to an embodiment, the system is configured for generating entangled graph states using photonic qubits. The present invention allow the generation and management of a first group of photonic qubits, which are configured to participate in the generation of at least one entangled graph state. Advantageously, the first group of photonic qubits can be initially prepared in a specific quantum state, such as an entangled state or a superposition of states, facilitating the subsequent creation of the entangled graph state.

According to an embodiment, the classical controller 110 is configured for manipulating and controlling the interactions between the photonic qubits within the first group to generate the entangled graph state. Preferably, the classical controller 110 can use techniques from quantum computing, such as single-qubit rotations and two-qubit gates, to achieve this manipulation and control.

According to an embodiment, the present invention may also be configured for generating and manipulating a second group of photonic qubits, which can be used in conjunction with the first group to create more complex entangled states released from the system 100.

According to an embodiment, the system 100 is equipped with a plurality of detectors for verifying the successful creation of the entangled state. This verification can be performed using various methods, such as measuring the correlations between the photonic qubits.

Advantageously, the use of entangled graph states generated by the present invention allows for the simultaneous processing of multiple pieces of information, potentially leading to significant improvements in computational efficiency and speed.

According to an embodiment, the entangled graph state is an intricate quantum state that encompasses a specific arrangement of photonic qubits. Preferably, these photonic qubits belong to the second group of photonic qubits. The entangled graph state is an entanglement of the state of the photonic qubits from the second group. This entanglement results in a correlated quantum state that cannot be described independently for each individual qubit, thus demonstrating non-classical correlations.

According to an embodiment, the present invention allows creating and manipulating entangled states of spin qubits. The source qubit is preferably a spin qubit, which is a type of quantum bit that utilizes the spin property of particles such as electrons or nuclear spins. Advantageously, the use of spin qubits allows for scalable quantum computing architectures due to their compatibility with current semiconductor technology.

According to an embodiment, the source module 130 can be configured with the capability to generate photonic qubits that can perform specific functions within the system 100.

According to an embodiment, the source module 130 is configured to produce at least one photonic qubit. This photonic qubit can serve a dual purpose:

a. Advantageously, it is capable of measuring the state of at least one source qubit. The measurement process allows for the determination and manipulation of the quantum state of the source qubit within the system, thanks to the entanglement feature of quantum physics.

b. Additionally, it can be configured to establish entanglement with at least one other source qubit. Entanglement is a fundamental concept in quantum mechanics, where two or more objects become linked and the state of one object can instantly affect the state of the other, regardless of the distance between them.

Preferably, the source module 130 can also produce photonic qubits that are configured to be processed and released from the system 100. These photonic qubits, once processed, can carry the results or intermediate states of computations performed within the system 100.

According to an embodiment, the present invention relates also to a computer-implemented method 200 for generating entangled states of a plurality of sources. The plurality of sources is configured to produce at least one plurality of entangled photonic qubits and can be implemented by a system 100 as previously described.

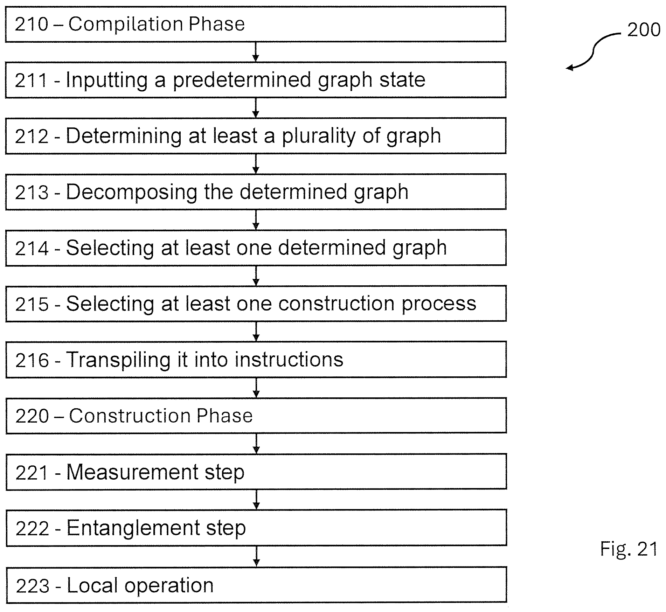

According to an embodiment, and as illustrated by figure 21, the method 200 comprises at least two phases: A compilation phase 210 and a construction phase 220.

Preferably, the compilation phase is configured to determine a series of steps of a construction process.

Preferably, the construction phase is configured to construct a predetermined graph state using a selected construction process.

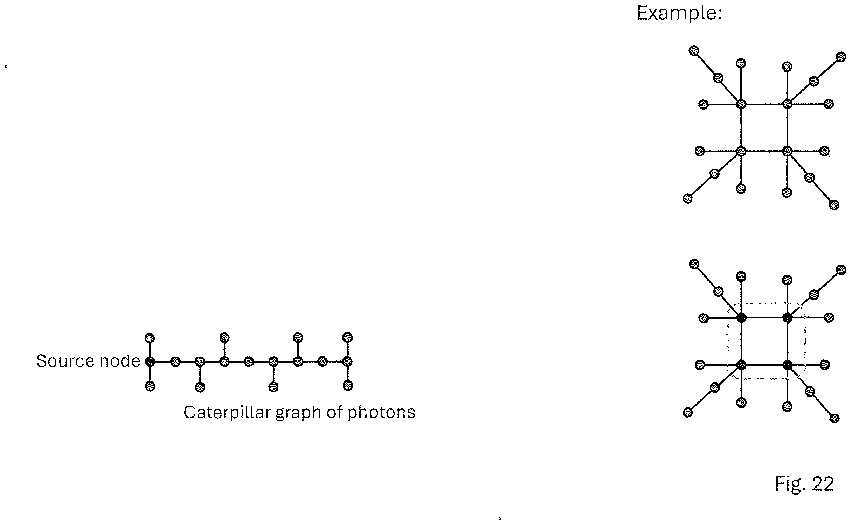

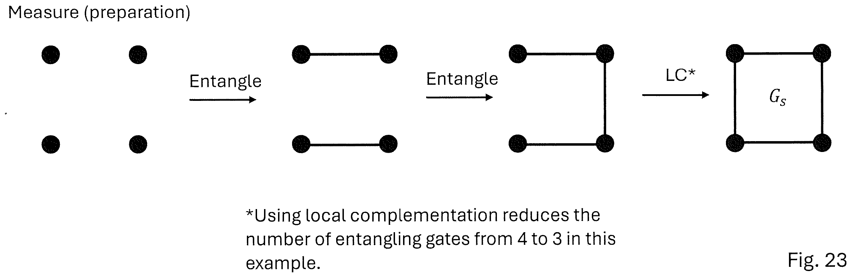

According to an embodiment, and as illustrated by figures 22 and 23, the compilation phase 210 comprises at least the following steps:

o Inputting 211 a predetermined graph state $G_p$ of qubits and a set of predetermined constraints, preferably the constraints of the set of predetermined constraints comprising at least:

- A maximum number of sources, $N_{max}$
- One or more metrics $M_i$ configured to be used to discriminate at least two processes to generate $G_p$
- At least one predetermined threshold $\varepsilon_i$ associated with at least one metric $M_i$

o Determining 212 at least a plurality of graphs $G_s$ that are local complements of $G_p$;

o For each determined graph $G_s$ that satisfies the constraints of the set of predetermined constraints, decomposing 213 the determined graph $G_s$ into at least one construction process to construct the determined graph $G_s$ using one or more steps comprising at least one among: a measurement step, an entanglement step, and a local operation step such that it minimizes at least one predetermined metric $M_i(G_s)$ within the associated predetermined threshold $\varepsilon_i$;

o Selecting 214 at least one determined graph $G_s$ that preferably satisfies the constraints of the set of predetermined constraints and that advantageously minimizes the best the set of predetermined constraints within the plurality of determined graphs, said selected graph being associated with at least a plurality of construction processes;

∘ Selecting 215 at least one construction process among the plurality of construction processes that preferably satisfies the constraints of the set of predetermined constraints and that advantageously minimizes the best the set of predetermined constrains within the plurality of construction processes;

∘ Transpiling 216 the selected construction process into instructions for the classical controller 110 to control the pulse module 120, the source module 130 switches, the entangling module 160, and the multiplexing module 150 to implement the selected construction process;

According to an embodiment, the construction phase 220 comprises at least the following steps:

o A measurement step 221 comprising at least the following sub-steps:

- Triggering, using the pulse module 120, one or more quantum sources of the source module 130 to produce one or more photons entangled with their respective source qubits;
- Routing the entangled photons to the entangling module 160, using the crossing network module 140, where the interferometer is set to implement only local gates, i.e. preferably the identity permutation, so that no additional entanglement is generated and each quantum source is then independently measured by the detectors of the plurality of detectors by measuring the entangled photons;

- Measuring, using the plurality of detectors of the entanglement module 160, the photons that are entangled with the respective source qubits so that the photon measurement outcome provides an indirect measurement of the state of the source qubits;
- Receiving the measurements by the classical controller 110 from the entanglement module 160;
- Processing the received measurement by the classical controller 110 ;
- Optionally, proceeding according to a first predetermined set of instructions;

◦ An entanglement step 222 comprising at least the following sub-steps:

- Triggering, using the pulse module 120, one or more quantum sources of the source module 130 to produce one or more photons entangled with their respective source qubits;
- Routing the entangled photons to the entangling module 160, using the crossing network module 140, where the interferometer is set to implement an entangling transformation;
- Measuring, using the plurality of detectors of the entanglement module 160, the photons, and at least one outcome projects one or more source qubits onto an entangled state;
- Receiving the measurements by the classical controller 110 from the entanglement module 160;
- Processing the received measurement by the classical controller 110 ;
- Optionally, proceeding according to a second predetermined set of instructions

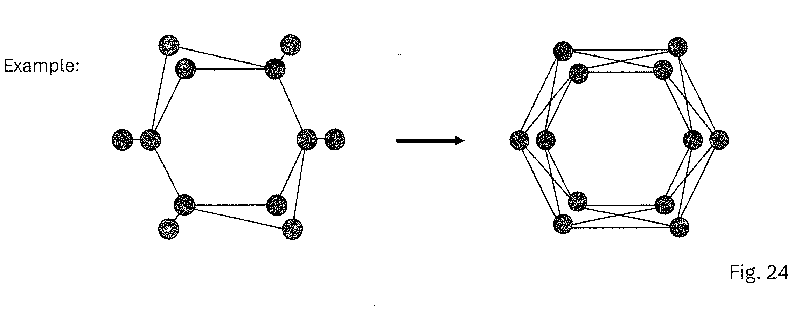

◦ A local operation step 223, as illustrated by figure 24, comprising at least the following sub-steps:

- Triggering the pulse module by the classical controller to apply a predetermined set of single-qubit gates on one or more source qubits.

Preferably, at least some of the steps of the operation being configured to be executed simultaneously, preferably so long as no source is involved in two steps at the same time; and/or

Preferably, the steps of the operation phase being configured to be executed in any order and/or repeated and/or executed in an order configured to change during the execution of one or more steps based on a predetermined set of rules

According to an embodiment, in the compilation phase 210, a series of steps of a construction process is determined based on the predetermined graph state of qubits and the set of predetermined constraints. The constraints may include a maximum number of sources, one or more metrics for discriminating at least two construction processes by generating at least one predetermined threshold associated with at least one metric.

According to an embodiment, in the compilation phase 210, at least a plurality of graphs that are local complements of the predetermined graph state are determined. For each determined graph that satisfies the constraints, it is decomposed into at least one construction process to construct the determined graph using one or more steps comprising at least one among the measurement step, the entanglement step, and the local operation step such that it minimizes at least one predetermined metric within the associated predetermined threshold. The best graph is selected based on the set of predetermined constraints, and the construction process associated with this graph is transpiled into instructions for the classical controller 110 to control the pulse module 120, the source module 130 switches, the entangling module 160, and the multiplexing module 150 to implement the selected construction process.

According to an embodiment, in the construction phase 220, the predetermined graph state is constructed using the selected construction process. The measurement step 221 comprises triggering one or more quantum sources of the source module 120 to produce one or more photons entangled with their respective source qubits, routing the entangled photons to the entangling module 160, where the interferometer is set to implement only local gates so that no additional entanglement is generated and each quantum source is then independently measured by the detectors by measuring the entangled photons. The photon measurement outcome provides an indirect measurement of the state of the source qubits, which are received by the classical controller 110 from the entanglement module 160 and processed.

According to an embodiment, the entanglement step 222 comprises triggering one or more sources to produce one or more photons entangled with their respective source qubit, routing the photons to the entangling module 160, where the interferometer is set to implement an entangling transformation. At least one detector of the plurality of detectors measures the photons, and at least one outcome projects one or more source qubits onto an entangled state. The measurements are received by the classical controller 110 from the entanglement module 160 and processed.

According to an embodiment, the local operation step comprises triggering the pulse module 120 by the classical controller 110 to apply a predetermined set of single-qubit gates on one or more source qubits. At least some of the steps of the operation phase 220 are configured to be executed simultaneously, preferably so long as no source is involved in two steps at the same time. The steps of the operation phase 220 are configured to be executed in any order and/or repeated and/or executed in an order configured to change during the execution of one or more steps based on a predetermined set of rules.

According to an embodiment, the method 200 allows for the efficient generation of entangled states by determining a series of steps of a construction process that minimizes at least one predetermined metric within the associated predetermined threshold, and selecting the best graph based on the set of predetermined constraints. The use of local complementation and resource-sharing multiplexing further increases the efficiency of the method 200 by reducing the number of components seen by photons and minimizing the time taken to generate the photonic graph state. The system 100 is instructed to produce a predetermined photonic entangled state, implementing a series of steps to construct and release the predetermined entangled photonic state on a periodic clock cycle.

According to an embodiment, the constraints of the set of predetermined constraints in this method further comprises at least:

a. A maximum generation time steps, $\tau_{max}$, which refers to the upper limit on the number of time steps that can be allowed within a given computation process. This constraint ensures efficient utilization of resources and prevents unnecessary prolongation of the computation process.

b. A predetermined success probability, $p_{s}$, after a specified number of time steps. This probability represents the likelihood of achieving a successful outcome in the quantum computing process following a certain number of time steps. By setting this constraint, the system 100 can be optimized to achieve a predetermined level of accuracy and reliability within an acceptable time frame.

The constraints as described above enable efficient resource management, improved computation speed, and increased accuracy in the quantum computing process.

According to an embodiment, the present invention pertains to a method for utilizing a predetermined graph state of qubits in quantum computation, with a particular focus on fusion-based quantum computation and measurement-based quantum computation.

According to an embodiment, a predetermined graph state of qubits is configured. This graph state is configured to represents a specific arrangement or configuration of quantum bits, i.e. qubits, each capable of existing in two distinct states, typically represented as 0 and 1, or $|0\rangle$ and $|1\rangle$. The term "predetermined" implies that the graph state has been intentionally set up according to a predefined pattern or structure.

According to an embodiment, the configured graph state is utilized in quantum computation. Quantum computation refers to the manipulation of qubits to perform complex calculations and solve problems more efficiently than classical computers, due to the principles of superposition and entanglement, for example.

Preferably, the method 200 is applied in fusion-based quantum computation. Fusion-based quantum computation (FBQC) is a paradigm of quantum computing that involves performing two-qubit measurements on multiple resource states. Unlike the circuit-based quantum computing (CBQC) paradigm, where quantum computation is performed by unitary gates on qubits, FBQC uses two-qubit measurements to carry out computations. This approach allows for efficient and fault-tolerant quantum computations by creating and manipulating resource states through two-qubit measurements.

Additionally, or alternatively, the method 200 can be employed for measurement-based quantum computation. In this approach, measurements are performed on the graph state to determine the outcome of a computation, without directly manipulating the qubits themselves.

Preferably, the use of the predetermined graph state in these computational methods offers several technical advantages. For instance, the predetermined graph state can be tailored to specific computational tasks, improving the efficiency and accuracy of quantum computations. Furthermore, the fusion-based and measurement-based approaches allow for the implementation of complex quantum algorithms with a reduced number of qubits and operations, making large-scale quantum computation more feasible.

According to an embodiment, the construction process comprises a series of steps, each step being configured to use a decision-making set of rules, like a decision-tree for example. This decision-making set of rules can be based on three possible outputs from a Repeat-Until-Success gate. These outputs include success, failure, and loss of quantum information.

Preferably, the current state of the graph under construction is one of the factors that influence the decision-making process. Instructions about how to proceed after any gate failures can also be incorporated into the decision-making set of rules.

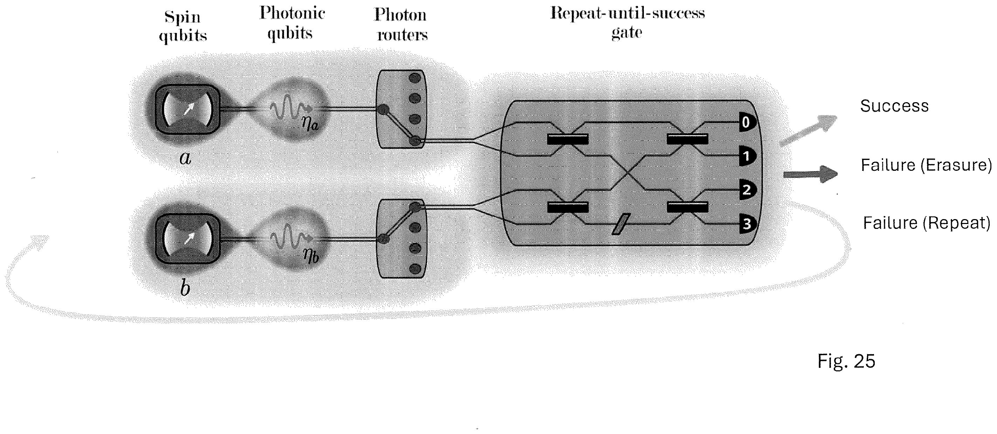

Preferably, the Repeat-Until-Success gate is designed to repeat a specific step until it achieves success or reaches a predetermined number of attempts without success. Advantageously, the loss of quantum information during the construction process can be managed by implementing error correction mechanisms or by repeating the affected steps. Figure 25 illustrates such a RUS gate as a non-limiting example.

According to an embodiment, the first predetermined set of instructions comprises the following steps:

a. Attempting a measurement step again (repeated measurement) for one or more quantum sources whose measurements were inconclusive during the initial attempt. This step aims to improve the accuracy and reliability of the measurement results by repeating the process.

b. Moving to a local operation step (local gate operation) for one or more quantum sources whose measurements indicate their source qubit state is correct. This step involves applying a local gate to these quantum sources, which can serve to further manipulate and process the quantum information stored in their qubits.

c. Moving to the next available step in the construction process for all other quantum sources that have not been addressed by the previous steps. This step ensures the efficient progression of the overall computation process by addressing each quantum source in turn, as resources and processing capabilities become available.

According to an embodiment, the present invention involves a sequence of steps, each associated with one or more quantum sources.

For example, attempting another entanglement step can be performed for those quantum sources whose associated photonic qubit detections were successful but only local gates were applied during the entanglement step. This step aims to ensure that the correct entanglement is achieved.

Preferably, moving to a local operation step can be carried out for those quantum sources whose associated photonic qubit measurements indicate that the correct entangling gate was applied up to local gates on one or more source qubits. This step allows further processing of the quantum state.

Advantageously, partially aborting the construction can be performed for those quantum sources whose associated photonic qubit measurements were inconclusive during the previous steps. The construction process is partially halted, and an alternative predetermined branch or a reversion to an earlier step in the construction process may be initiated. This step helps to mitigate potential errors and maintain the integrity of the computation.

For example, reverting to an earlier step in the construction process or an alternative predetermined branch of the construction process that accounts for the inconclusive entanglement step can be taken when the construction for one or more quantum sources is partially aborted. This allows for error correction and adaptability in the computation process.

Advantageously, moving to the next available step in the construction process can be performed for those quantum sources whose associated photonic qubit measurements were successful and indicated that the correct entangling gate was applied during the previous steps. This step allows the computation to progress smoothly.

According to an embodiment, the construction process comprises a tree-like structure of steps organized into multiple branches, preferably each branch representing an alternative series of steps for constructing a predetermined graph state.

For example, the tree of steps can be structured in a hierarchical manner with multiple branches. Each branch within the plurality of branches can represent an alternative series of steps that can be followed to construct the predetermined graph state. The tree structure allows for flexibility in the construction process, as different branches can be selected based on specific requirements or constraints. Advantageously, this adaptability enhances the efficiency of the construction process.

According to an embodiment, the method 200 involves executing a series of steps in one branch of a plurality of branches. In the event of at least one gate failure or inconclusive measurement while executing these steps, the system 100 can be configured to select a different branch among the plurality of branches to be followed to reach the predetermined graph state.

According to an embodiment, the present invention comprises a plurality of qubits and a set of quantum gates for manipulating the state of the qubits. The predetermined graph state is represented by a specific configuration of the qubits. Advantageously, the present invention allows for error correction during the execution of the series of steps in one branch. If a gate failure or inconclusive measurement occurs, the system 100 can automatically switch to an alternative branch, thereby minimizing the impact of errors on the final graph state, and on the time or resources needed to construct it. Preferably, each branch of the plurality of branches represents a different sequence of steps. The selection of a different branch can be based on the results of the executed steps and the occurrence of gate failures or inconclusive measurements.

Advantageously, the method 200 can increase the reliability and efficiency of the system 100 by reducing the number of errors in the construction of the predetermined graph state. The ability to switch branches dynamically based on the results of the executed steps allows for a more robust and adaptable solution.

According to an embodiment, the present invention may include additional error correction mechanisms, such as quantum error correcting codes, to further enhance the reliability of the constructed graph state. These mechanisms can be used in conjunction with the branch selection method described herein to provide even greater error resilience.

It is also noted that the branches may be pre-computed or generated dynamically based on the specific steps required for the construction of the predetermined graph state. The choice between pre-computed and dynamic branches may depend on factors such as computational resources, algorithm complexity, and error resilience.

In summary, the present invention described herein provides a robust and adaptable approach to constructing predetermined graph states in quantum computing systems. By dynamically switching branches based on the results of executed steps and the occurrence of errors, this method can increase the reliability and efficiency of the system.

According to an embodiment, the entanglement step of this method comprises several distinct features.

According to an embodiment, the entanglement step further comprises a permutation sub-step. This permutation sub-step is designed to rearrange the quantum states involved in the entanglement process. Advantageously, the permutation sub-step comprises a plurality of cycles. Each cycle represents a sequence of operations within the permutation sub-step.

According to an embodiment, each cycle has an associated measurement outcome. These outcomes can be used as indicators of the success or failure of the entanglement process during the current cycle. Preferably, the measurement outcomes are configured into three categories: Success outcomes, First failure (repeat) outcomes, and Second failure (erasure) outcomes.

Preferably, the Success outcomes are designed to trigger the controller to move to the next available step in the construction process. This indicates that the entanglement operation was successful during the current cycle.

For example, in case of a first failure (repeat) outcome, the classical controller 110 can be configured to retry an entanglement step including the same cycle. This allows for repeated attempts at the entanglement operation if it fails initially but not catastrophically.

Advantageously, if a second failure (erasure) outcome occurs, the classical controller 110 can be triggered to revert to an earlier step in the construction process or a different branch of the construction process. This erasure outcome signifies that one or more previously-succeeded entangling operations need to be undone or accounted for in a different manner.

One of the technical advantages of the present invention lies in its ability to handle potential failures during the entanglement process, allowing for repeated attempts and adaptability to different situations. The use of measurement outcomes to guide the classical controller's actions ensures efficient and controlled progress through the construction process.

According to an embodiment, the present invention may comprise a predetermined set of single-qubit gates. These gates are initially configured in a specific arrangement.

Preferably, the present invention may comprise a mechanism for modifying the configuration of the single-qubit gates based on previous measurements. This modification can be performed according to the same or a different predetermined set of instructions.

Advantageously, the configuration of the single-qubit gates can be modified preferably based on at least one branch of the plurality of branches. This adaptive approach allows for dynamic adjustments.

According to an embodiment, the construction phase 220 comprise an emission step. This emission step may comprise several sub-steps:

  a. Configuring by the classical controller 110:

    i. one or more switches of the plurality of switches to route a plurality of photons to the multiplexing module, or
    ii. one or more sub-switches of the plurality of sub-switches to route the photons to at least one predetermined output.

  b. Once the configuration is complete, controlling, by the classical controller, the pulse module to trigger one or more quantum sources to emit one or more photons to be released from the system.

According to an embodiment, during the configuration sub-step, the classical controller 110 configures one or more switches from a plurality of switches within the system 100. The configuration involves routing a plurality of photons to a multiplexing module 150 or one or more sub-switches from a plurality of sub-switches to route the photons to at least one predetermined output. This configuration is carried out preferably based on predetermined settings.

According to an embodiment, once the configuration is complete, the classical controller 110 controls the pulse module 120 to trigger one or more quantum sources within the system 100. These quantum sources emit one or more photons that are then released from the system 100.

According to an embodiment, the present invention is configured to generate near-deterministic, loss-tolerant photonic entangled states efficiently. The present invention achieves high success probability by entangling sources into a graph state, advantageously before emitting any photons out of the system. The present invention minimizes the number of optical components seen by graph photons and reduces the impact of photon loss through strategies such as multiplexing, resource sharing, local complementation, and disconnected subgraphs.

We will now describe a non-limiting example of implementation of the present invention to show how the present invention can be used from a scientific point of view to minimize resource overhead in fusion-based quantum computation using hybrid spin-photon devices. The following is a non-limiting example, extracted from a non-published and confidential scientific work made by the inventors of the present invention. The following paragraphs and sections are designed to provide a scientific ground as well as non-limiting examples regarding the present invention to help its understanding. None of the following terms or wordings limit the scope of the present invention as it has been previously described.

**Minimize resource overhead in fusion-based quantum computation using hybrid spin-photon devices:**

Hereafter, we will present three schemes for constructing a (2,2)-Shor-encoded 6-ring photonic resource state for fusion-based quantum computing, each relying on a different type of photon source. We benchmark these architectures by analyzing their ability to achieve the best-known loss tolerance threshold for fusion-based quantum computation using the target resource state. More precisely, we estimate their minimum hardware requirements for fault-tolerant quantum computation in terms of the number of photon sources to achieve on-demand generation of resource states with a desired generation period. Notably, we find that a group of 12 deterministic single-photon sources containing a single qubit degree of freedom can produce the target resource state near-deterministically by exploiting entangling gates that are repeated until success. The approach is fully modular, eliminates the need for lossy large-scale multiplexing, and reduces the overhead for resource-state generation by several orders of magnitude compared to architectures using heralded single-photon sources and probabilistic linear entangling gates. Our work shows that the use of deterministic single-photon sources embedding a qubit substantially shortens the path toward fault-tolerant photonic quantum computation

Section I: Introduction

Fault-tolerant quantum computation (FTQC) is considered as vital by the skilled person in the art to the correct execution of the most impactful quantum algorithms, such as prime factorization, linear system solving, and chemical simulations.

Photonic architectures show particular promise for achieving fault-tolerance because photons are excellent carriers of quantum information. This property enables modularity, where numerous identical, smaller devices can be fabricated independently and interconnected to scale computational power. Such modularity is invaluable for improving the yield of components that meet the high quality standards necessary to satisfy the error correction thresholds. Despite these advantages, the resource overheads currently required to solve industry-relevant problems remain a significant challenge.

In photonic quantum computation, photon loss is the dominant error. For this reason, nearly all photonic fault-tolerant architectures focus on achieving high loss thresholds. One such architecture for FTQC is fusion-based quantum computation (FBQC).

In this computing paradigm, which is a variation of measurement-based quantum computation, photonic resource states are constructed and then measured. Notably, FBQC uses finite-sized graph states that are supplied to a fusion network, where all photons are consumed by two-qubit joint measurements, or fusion gates, that serve to both construct the photonic lattice and perform the desired quantum computation on it.

FBQC is fault-tolerant provided that the supplied resource states can be produced with a per-photon loss probability well below the loss-tolerance threshold, which depends on the fusion network, the choice of resource state, and the type of fusion gates. This threshold can be increased by code concatenation, where the qubits of the resource state are themselves encoded with an inner quantum error correcting code, such as a Shor code or a graph code. This results in a bigger and more complex resource state. However, more complex states require more resources to construct that may also incur additional losses, therefore offsetting some of the original gain. It is thus useful to explore different resource-state generator (RSG) architectures to identify strategies that minimize loss while also minimizing the resource overhead.

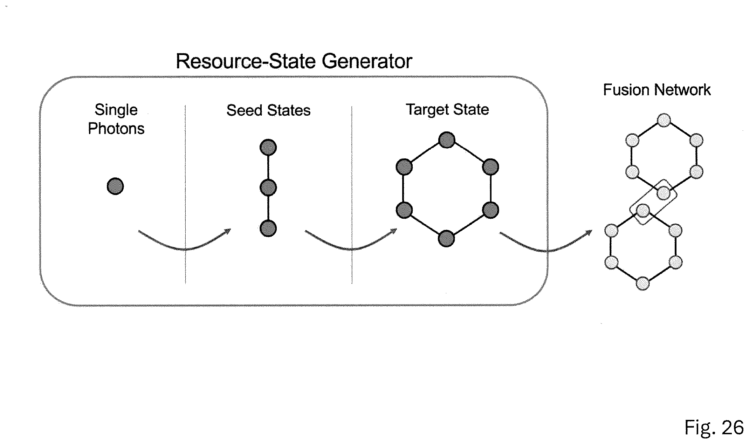

In this example, we study the steps required to construct resource states for FBQC (see Figure 26). We present three different architectures for constructing the 24-photon Shor-encoded (2,2) 6-ring resource state that can achieve a loss tolerance of 7.5% when used in conjunction with biased measurements. The first is an all-photonic architecture that requires only a source of single photons, either heralded or deterministic. The second uses a deterministic sources of caterpillar graph states, while the third uses a group of such sources that can be entangled using repeat-until-success (RUS) control-Z gates. In figure 26, Single photons can be combined using linear optics and measurements to produce entangled seed states, such as a linear-cluster state or a Greenberger-Horne-Zeilinger (GHZ) state. The black lines connecting photons indicate that a control-Z operation (CZ) was applied to the two photonic qubits each initially prepared in the $|+\rangle = (10) + |1\rangle)/\sqrt{2}$ state. States which can be described using this representation are called graph states. Multiple seed states can be combined to construct a larger graph state, the target resource state, that is sent to a fusion network to implement fusion-based quantum computation. This work focuses on the stages up until the target state is produced

We begin in Section II by describing different source types and different schemes to process the photons they emit to construct the target resource state. In Section III we present the figures of merit we use to benchmark the architectures, compute their optimal bounds on resource efficiency and present simulation results. We end with a discussion in Section IV and a brief outlook in Section V.

Section II: ARCHITECTURES FOR PHOTONIC RESOURCE-STATE GENERATION

We describe four types of single-photon sources and three schemes to manipulate the emitted photons. We call the combination of a source and a scheme an RSG architecture.

A. Photon sources

1. Heralded single-photon source

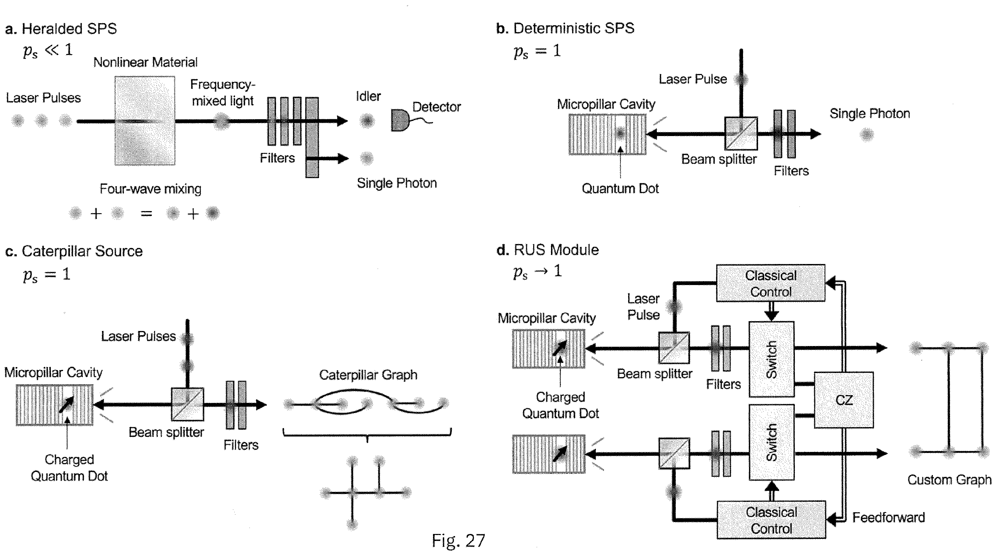

A heralded single-photon source (HSPS) is a single-photon source (SPS) that succeeds in the generation of a single photon with probability $p_s < 1$ when triggered, and provides a heralding signal when it does succeed. This can be achieved, for example, by exploiting four-wave mixing in a material with a third-order nonlinearity. Upon excitation by a strong pump laser pulse, two laser photons in the pulse may spontaneously annihilate leading to the creation of a pair of photons with a probability $p_{pair}$, called the idler and the signal, with different frequencies that sum to the laser frequency (see Figure 27 section a). The idler and signal can then be split into two different spatial modes so that the detection of the idler heralds the presence of its twin photon in the other spatial mode. This detection is not perfect, and the heralding efficiency $\eta_H$ is the probability that a photon is present in the signal mode when a photon was detected in the idler mode. The probabilities $p_s$ and $p_{pair}$ are then related by $p_s = \eta_H p_{pair}$.

The downside of this approach is that the success probability $p_s$ increases with the pump power, but if the pump is too intense then it is highly likely that multiple pairs will be produced instead. This leads to a multi-photon error probability that is proportional to $p_s$. Thus, $p_s$ is commonly limited to below 1%. One technique proposed to overcome this issue relies on photon-number resolving detectors to measure the idler. In the limit of perfect heralding efficiency and photon-number resolution fidelity, this technique can boost the success probability up to at most $p_s = 1/4$, provided that the heralding efficiency is sufficiently high to reach the desired noise suppression ($\eta H > 0.99$).

In figure 27, section a, a heralded single-photon source (SPS) constructed using intense laser pulses interacting with a non-linear material to induce four-wave mixing, whereby two pump laser photons are converted into a pair of photons of different frequencies. By filtering the light in frequency and detecting the idler photon, the presence of the single-photon signal is heralded.

In figure 27, section b, a deterministic SPS constructed from a quantum dot (QD) embedded in a micropillar cavity. The QD is excited using off-resonant laser pulses and triggered to emit a single photon at its resonance frequency, which can be separated from scattered laser photons using a highly transmittive beam splitter and filter.

In figure 27, section c, a deterministic source of caterpillar graph states constructed from a deterministic SPS containing an additional qubit degree of freedom such as an electron spin. The source qubit mediates entanglement between a chosen degree of freedom in successive photons such as polarization or time bin, producing a caterpillar graph state.

In figure 27, section d, a repeat-until-success (RUS) module where a switch is used to route photons entangled with the source qubit to an entangling module that performs a probabilistic CZ gate between two source qubits, allowing the construction of more complex graphs using fewer photons.

2. Deterministic single-photon source

A deterministic SPS (DSPS) does not suffer from a fundamental trade-off between emission probability and multi-photon errors. It produces a nearly perfect single photon every time it is triggered. Since it is deterministic, it can be assigned a success probability of $p_s = 1$. Any missing photon is then attributed to the difficulty of collecting the photon. Later on, we include the photon collection efficiency in the transmission efficiency (see III A 3).

Deterministic sources are commonly implemented using atoms or artificial atoms such as quantum dots (QDs). The main challenge for this approach is designing and fabricating devices that efficiently collect the emitted photons. One very successful and robust approach is to fabricate microcavities using distributed Bragg reflectors to enhance QD emission into a single spatial mode, that can then be collected by an optical fiber. The QD emission can be triggered using excitation pulses that are detuned from the emission frequency of the QD, and thus can be separated from the emitted single photons using a filter (see Figure 27 section b). Alternatively, it is possible to excite the QD resonantly, collect emission using a birefringent cavity, and filter the orthogonally-polarized photons.

3. Deterministic source of caterpillar graph states

Deterministic emitters provide flexibility for generating useful states. Unlike heralded sources, the system's internal degrees of freedom can be exploited as a quantum memory to produce entangled states of light on demand through the process of sequential entanglement generation. The number of additional levels determine the complexity of the entangled state that can be produced. By adding just one qubit degree of freedom, such as an electron spin, to a two-level emitter, it is possible to generate linear cluster states and GHZ states. More generally, such an emitter can produce photonic caterpillar graph states, which are graph states where any dangling photons are at most one degree separated from a central one-dimensional cluster (see Figure 27 section c).

Caterpillar graph states are useful building blocks for constructing resource states. Since a caterpillar source can also produce GHZ states on demand, fusion gates can be boosted to a success probability of $1-1/2^b$, where the positive integer $b \geq 2$ is the level of boosting, while consuming $2^b-2$ additional ancillary photons per gate. Alternatively, 2b additional dangling photons can be added to the building block during generation to allow repeated fusion attempts without using ancillary states, again bringing the success probability up to 1-1/2$^b$. This latter approach requires adaptivity, which can increase the chance that remaining dangling photons in the resource state are lost. In addition, to ensure a high success probability, many dangling photons must be produced even if the first fusion attempt ends up being successful. Since the gate will succeed after two attempts on average, many unused photons must be measured to decouple them from the resource state.

4. Repeat-until-success module

To address the challenges with repeated fusions described above, an alternative is to entangle two or more caterpillar sources containing a qubit before emitting the fused graph (see Figure 27 section d for an example using two caterpillar sources). To entangle two sources, each source emits a photon that is sent to a small linear-optical module, where the two photons interact and get measured to implement a fusion operation. When one of the correct detection patterns is observed, this results in a controlled-Z operation applied on the sources' qubits. The operation is thus probabilistic, but it can be repeated until it succeeds. In the absence of photon loss, the success probability $p_s$ can then arbitrarily approach 1 at the cost of taking more time to attempt gates.

This so-called RUS gate, and related RUS measurements, have recently been of great interest for designing hybrid spin-optical quantum computing (SPOQC) architectures tailored to quantum emitters containing a spin qubit, showing impressive thresholds. Here we demonstrate that they can also substantially improve a standard FBQC architecture, as the entanglement between the sources carries over to the emitted photons, thus allowing the generation of graph states with a more complex topology than caterpillar graphs, directly at source. Unlike repeated fusion gates, after entanglement is established, no additional dangling photons need to be produced. Therefore this approach ensures that a minimum number of photons are consumed to establish a graph edge. Moreover, the sources serve as a lossless quantum memory to store entanglement until other states are prepared.

B. Three RSG schemes

An RSG scheme is a sequence of steps each involving multiple quantum operations which transform an initial state into the desired target resource state. The success or failure of each step is heralded by measurement outcomes. Linking the steps together involves spatial or temporal multiplexing. A complete RSG architecture is specified by combining an RSG scheme and a source producing the initial states which the scheme takes as input. We now propose three different such RSG schemes to construct the 24-photon Shor-encoded (2,2) 6-ring resource state originally proposed in the prior art. Each scheme aims to achieve as high a performance as possible by making the most of the capabilities of each source type presented earlier.

Each scheme also makes use of a tailored multiplexing strategy to overcome probabilistic operations. This technique achieves a high generation success probability by attempting probabilistic operations many times so that a sufficient number succeed. This repetition can be done in parallel using many sources distributed in space (spatial multiplexing) or using just a few sources and repeating operations sequentially in time (temporal multiplexing). Spatial multiplexing costs more physical sources, while temporal multiplexing reduces the rate at which the RSG can produce resource states. Moreover, the successfully produced states must then be routed to the desired output mode(s) in both space and time, which incurs losses.

1. All-photonic scheme

The first approach is an all-photonic scheme that aligns with the original vision of FBQC, whereby multiple unentangled single photons are passed through probabilistic entangling linear-optical circuits and fusion gates that herald the successful generation of a resource state.

Due to probabilistic operations, as the resource state becomes more complex, the success probability exponentially drops to zero. A direct approach would then cause an unmanageable exponential resource overhead. This can be alleviated by dividing up the generation procedure into successive stages where intermediate operations are heralded so that complete states can be grouped together for the next operation. This dramatically increases the overall success probability and substantially decreases the amount of multiplexing needed to reach high-efficiency operation. The downside is that the number of lossy components seen by each photon, such as beam splitters and phase shifters, may increase to facilitate the selection and routing of photons between stages, possibly decreasing the maximal loss per component that the architecture can tolerate.

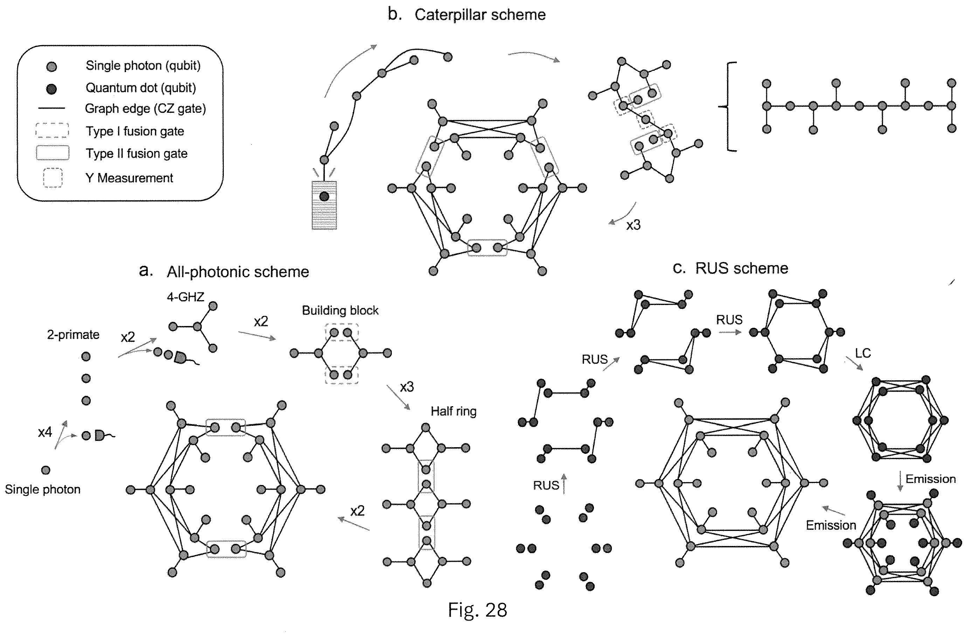

In figure 28, when several states need to be combined to progress to the next stage, the number is appended to the arrows. The fusion operations are boosted by generating and measuring additional ancillary photons which are omitted for simplicity; in figure 28, section a, an all-photonic architecture using single-photon sources that are either heralded or deterministic followed by probabilistic entanglement generation and fusion gates; in figure 28, section b, using a deterministic source of caterpillar graph states followed by fusion gates; in section c, using a group of at least 12 deterministic caterpillar sources and repeat-until-success (RUS) CZ gates and local complementations (LC).

In Figure 28 section a, we present an all-photonic scheme using six multiplexing stages. We designed this particular scheme to reduce the number of states needed to attempt a new stage while also maintaining a reasonable success probability for each stage. This provides a good compromise between boosting the success probability while minimizing the number of states being routed between stages. The construction begins with single photons, produced either probabilistically or deterministically. Four photons are combined to produce an intermediate 3photon state, called a 2-primate, which succeeds with a probability of 28.4%. Two of these 2-primates can then be combined into a 4-photon GHZ states with a success probability of 9.1% by measuring two of the photons. From there, twelve 4-GHZ states are fused together in three consecutive stages to produce the target resource state.

Normally each unboosted fusion gate is expected to succeed with a probability of 50%. Here, to improve the probability of successfully generating the state, we assume that each gate is boosted to reach a success probability of 75% using four additional single photons (not shown in Figure 28 section a). Indeed, in the low-loss regime considered in our study, the cost of producing additional photons is lower than the cost of multiplexing more fusion gates. However, boosting beyond 75% requires additional GHZ states, which are themselves costly to produce from single photons and do not justify the mild increase to success probability compared to increasing the amount of multiplexing.

This scheme can also be used starting with a source of 4-GHZ states. In that case, the first three stages of multiplexing can be neglected. We call the scheme that generates the 24-photon state directly from a source of 4-photon GHZ state a hybrid scheme.

### 2. Caterpillar scheme

The caterpillar scheme first applies two type-II fusion gates and a few Y measurements to a 17-photon caterpillar graph to construct one-third of the resource state. The full 24-photon ring is then constructed by fusing three copies of those building blocks using three fusion gates (see Figure 28 section b for the fusion operations and exact caterpillar state required).

Although only a single caterpillar source is needed to produce the initial 17-photon state, the following stages require fusion gates. Thus, in this architecture, while substantially reduced, multiplexing is still required to overcome the probabilistic nature of fusion operations. As before, to optimize the success probability, all fusion gates are boosted to a success probability of 75%, but this time using a Bell pair (not shown in Figure 28 section b). Note that a caterpillar source can also be used to efficiently boost fusion gates beyond 75%, however we find that the relative improvement compared to once-boosted gates is minor and may not justify the additional losses due to the increased complexity. Hence, we focus on the once-boosted fusion gate in our analysis.

### 3. RUS scheme

The last approach that we introduce involves using RUS gates to entangle a small group of caterpillar sources. There are various ways to construct the resource state using interacting emitters. We propose here a scheme aimed at minimizing the optical depth for the generated resource state. This is achieved by first creating all the necessary entanglement links between the sources and only emitting the photonic state once this first step is successful. The entanglement between the sources is directly transferred to the photons generated in this second stage. In that case, photon loss occurs only due to the source itself and a single active switch is needed to release the photon from the RUS module (see Figure 27 section d).

Naively generating all 32 edges of the resource state requires the detection of 128 photons on average. Losing just one photon can destroy many edges and substantially increase the generation time. This problem is alleviated by recognizing that the 12 dangling photons of the resource state can be produced deterministically, provided that the highly-connected central ring of 12 qubits is first prepared across 12 sources. Furthermore, using the Graph State Compass (GSC) python package, we find that this smaller graph has a minimum-edge representation with just 14 edges, which can be transformed into the desired 12-qubit central ring using local complementation (LC)1, see Figure 28 section c. The minimum-edge representation is hereafter called the LC-graph. This approach works only because the dangling photons can be produced afterwards, since the full 24-photon resource state is already in a minimum-edge representation.

The LC-graph has further useful properties. Most qubits have a low degree of connectivity and so photon loss is less destructive. In addition, it can be constructed by connecting together identical subgraphs in three stages. Thus, if a photon is lost when generating one subgraph, it will not destroy the others.

Once the spin graph is complete, it is transformed into the central 12-qubit ring of the resource state using LC. Each source then emits a photon, mapping the prepared graph onto the emitted photons. Since the sources remain entangled to the photonic graph, they can emit a second photon to produce the 12 dangling photons of the final resource state. Finally each spin is measured to decouple it from the graph and reset for the next cycle.

### III. ARCHITECTURE EFFICIENCY COMPARISON

#### A. Figures of Merit

To compare architectures, we define two figures of merit quantifying the performance of an RSG: the resource efficiency $\eta_R$ and the transmission efficiency $\eta_T$. These metrics are designed to describe RSG architectures that operate on a periodic clock cycle with a clock rate r, where a single resource state is produced by the RSG at the end of every cycle with a success probability $p_{rsg}$. This requirement is important to ensure synchronization between different RSGs and synchronization with the clock cycle of the fusion network required to perform FBQC.

1. Resource efficiency

To benchmark RSG overhead, a platform-agnostic metric is needed that captures trade-offs across RSG architectures. This metric could encompass factors like the energetic cost of operation, the fabrication cost, or the spatial footprint of the device. Designing an inclusive and comprehensive definition of resource efficiency is a challenge that should be addressed in a future work. Here, we consider a simple definition that enables the comparison of RSG architectures exploiting spatial and temporal multiplexing schemes.

To quantify the resource efficiency in the spatial domain, we use the ratio of the number of photons in the final resource state N to the number of sources $N_0$ used to produce it. In the temporal domain, we consider the ratio of the RSG clock rate r to the rate $r_0$ of the laser pump used trigger the sources (the internal clock of the RSG). Combining these, we define a spatio-temporal resource efficiency of:

$$Equation\ 1: \eta_R \ = \ \frac{N_r}{N_0 r_0}$$

By conservation of energy, we must always have $\eta_R \leq 1$. For example, one source ($N_0 = 1$) producing a large resource state of N photons implies that $r \leq r_0/N$ as the source requires a minimum time to emit all N photons. The ratio $\tau = r_0/r$ also quantifies the number of internal RSG clock cycles that the $N_0$ sources are operated for in order to attempt to produce a single resource state.

Crucially, the resource efficiency as defined above does not discriminate between spatial and temporal multiplexing. As such, it also does not fully capture important considerations regarding the range of values for r and $r_0$ that are reasonable for a given material platform or fault-tolerant architecture. Thus, it is also important to interpret $\eta_R$ in the context of a specific implementation. We will touch on some of these considerations in Section IV.

2. Upper bound on $\eta_R$

The maximum possible $\eta_R$ is fixed by the RSG architecture. This bound is reached in the limit of perfectly resource-efficient multiplexing. In this limit, an optimal multiplexer (MUX) is one that does not waste any photons. Every photon that is produced by a source will be consumed by the RSG to construct a resource state or released as part of the resource state.

A spatial MUX does not decrease RSG rate ($r = r_0$) and so $\eta_R = N/N_0$ depends only on the number of sources $N_0$. If the architecture must consume an average of $N_{avg}$ photons to produce on average one resource state, then a necessary condition to arbitrarily improve the RSG success probability $p_{rsg}$ toward 1 is that the $N_0$ sources produce a minimum of $N_{avg}$ photons on average. Thus we have $p_s N_0 \geq N_{avg}$ which implies $\eta_R \leq p_s N/N_{avg} = \tilde{\eta}_R$. This upper bound can be generalized to $r \neq r_0$ by noting that an optimal temporal MUX allows one to reduce $N_0$ at the cost of reducing r by the exactly the same proportion. Hence:

$$Equation\ 2: \eta_R \ = \ \frac{N_r}{N_0 r_0} \ \leq \ \frac{p_s N}{N_{avg}} \ = \ \tilde{\eta}R$$

Knowing the upper bound, it is convenient to define the discrepancy between $\eta_R$ and $\tilde{\eta}_R$, which is directly attributed to the ability for a MUX to use the available photons. This leads to a natural definition of MUX efficiency:

$$Equation\ 3: \eta_{mux} \ = \ \frac{N_{avg} r}{N_0 r_0}$$

so that

$$Equation\ 4: \eta_r \ = \ p_s \eta_{rmux} \frac{N}{N_{avg}}$$

This final expression is convenient as it clearly separates three independent contributions to the resource efficiency: the success probability $p_s$ that depends only on the source, the MUX efficiency $\eta_{mux}$ that depends only on the multiplexing network, and the efficiency of photon consumption $N/N_{avg}$ that depends only on the scheme.

The above derivation of $\eta_{mux}$ assumes that sources operate continuously for the entire RSG cycle. This is not the case for the RUS module because sources may idle after generating an edge. For example, in Figure 28 section c, the last operation before LC will be a RUS gate to establish the edge connecting just two of the 12 sources. When this RUS gate is being applied, the 10 other sources must wait without emitting photons, which increases the number of internal cycles per source. Thus $N_{avg}$ will underestimate the cost in time and overestimate the upper bound on resource efficiency. In this case, the upper bound can instead be computed knowing the average number of internal clock cycles $\tau_{avg}$ used to produce a resource state:

$$Equation\ 5: \eta_R \ \leq \ \tilde{\eta}R \ = \ \frac{N}{N_0 \tau_{avg}}$$

### 3. Transmission efficiency

In practice, reaching the upper bound on resource efficiency is challenging, as improving $\eta_{mux}$ to unity often demands a complex multiplexing network capable of flexibly redistributing photons in space and time for use by the RSG at the right place and time. However, increasing the complexity of the multiplexing network reduces the transmission efficiency $\eta_T$ of photons in the RSG due to the greater number of optical components, such as beam splitters, phase shifters, mode crossings, and delay lines, required for photon routing. For this reason, it is useful to distinguish between the transmission efficiency that depends on the specific choice of multiplexing network, denoted here as $\eta_x$, and the efficiency of photons produced by the source, which we denote $\beta$. This latter efficiency impacts all types of sources and it quantifies the transmission between the source and the input of the RSG network, including the collection efficiency of the photons at the output of the source and it quantifies the transmission between the source and the input of the RSG network, including the collection efficiency of the photons at the output of the source and loss due to filtering or frequency separation. This gives a total RSG transmission efficiency of:

$$Equation\ 6: \eta_T \leq \beta\eta_x$$

Note that both $\eta_T$ and the RSG success probability $p_{rsg}$ impact the logical error rate of the fusion network but they do so in different ways. A non-unity $\eta_T$ will largely cause uncorrelated photon loss errors whereas non-unity $p_{rsg}$ results from the failure of at least one probabilistic operation inside the RSG that may introduce correlated errors. The error-correction threshold for $\eta_T$ depends on the resource state being produced, and is known to be 92.5%. However, the error-correction threshold for $p_{rsg}$ depends on how the state is constructed and would require a detailed error correction simulation of the fusion network to compute. Such a task goes beyond the scope of this comparative study and so we instead fix p = 0.999 >> 0.925 so that any errors are dominated by independent photon loss. In addition, we verify that changing the value of $p_{rsg}$ does not significantly impact the conclusions drawn from our study.

### 4. Per-component maximal loss

To achieve fault-tolerance, it is necessary to have $n_T \geq 0.925$. It is then instructive to determine the minimum values of $\beta$ and the transmission of basic optical components contributing to $\eta_x$ that are needed to reach this target.

Note that, if $\eta_x = 1$, then we must have $\beta \geq 0.925$. Since the photon collection efficiency is characterized regularly in the literature, we do not break down the various components contributing to it. Instead, we define it as the probability of having a photon in a waveguide or fiber at the point just after any necessary filters (see Figure 27).

Setting aside $\beta$ for now, we focus on the analysis of $\eta_x \geq 0.925$. This requirement is satisfied by many possible configurations of the RSG that each correspond to a different value of $\eta_R$. It is thus important and nontrivial to find the maximum resource efficiency such that the RSG operates in the loss-tolerant regime. For a given architecture, and considering only D optical components that dominate the losses with a similar loss-per component of x, we can write $\eta_x = (1 - x)^D$. Here, we denote D as the optical depth of the network, or the number of the most-lossy components seen by a photon passing through the RSG. Importantly a lower bound on D can be estimated for a particular architecture, which allows for an estimate of the per-component maximal loss x such that $\eta_x \geq 0.925$ using:

$$Equation\ 7: x \leq 1 - 0.925^{1/D}$$

### B. Performance bounds

Using the above-defined metrics, we benchmark different sources combined with the schemes described in Section II B:

    a. First:

        i. all-photonic scheme with a HSPS at $p_s = 0.5\%$,
        ii. all-photonic scheme with a HSPS at $p_s = 25\%$,
        iii. all-photonic scheme with a DSPS,
        iv. a hybrid scheme that uses a deterministic source of 4-GHZ states to bypass the first steps in the all-photonic scheme,

    b. Then, the caterpillar source and scheme described in Section II B 2, and
    c. Then, the RUS module and scheme described in Section II B 3.

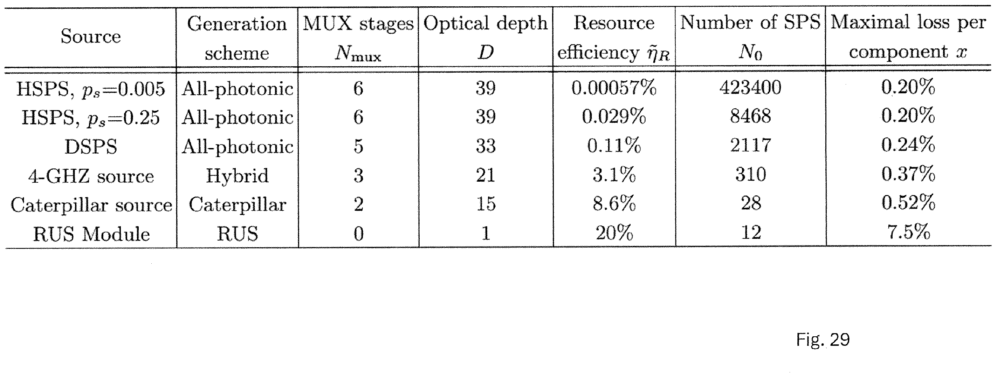

The results are summarized in the table of figure 29.

In figure 29, for each source and generation scheme, the third column gives the number of multiplexing stages and the fourth column gives the estimated minimum optical depth associated to the multiplexing network. The maximum resource efficiency in the fifth column is given by Equation 2, and an example of number of SPS reaching this bound is computed via Equation 1 for a rate r=100MHz and displayed in the sixth column. The last column gives the maximal loss per component that each architecture can tolerate to reach a total transmission efficiency of 92.5% when $\beta=1$, given by Equation 7. Since $\beta$ contributes only once to the total transmission, this maximal loss per component also estimates the required source efficiency to be $\beta \geq 1 - x$. The non-RUS architectures use fusion gates boosted to a success probability of 3/4. All sources are taken to operate at a base repetition rate of $r_0 = 1\,GHz$, which is expected to be limited by recovery times for detectors and feedforward operations.

## 1. All-photonic scheme

The upper bound on resource efficiency $\tilde{\eta}_R$ for the all-photonic scheme can be computed from Eq. 2 by first computing the average number of photons $N_{avg}$ consumed to produce one resource state on average. This can be computed following methods well known by the skilled person in the art by knowing the success probability $p_i$ of each stage $i = 1, 2,...$ of the six-stage scheme, along with the number of ancillary single photons $a_i$ used to boost fusion gates and the number of copies $c_i$ of the state required for the next stage.

For example, to produce on average one 2-primate we need $c1 = 4$ single photons per attempt and we must take on average $1/p_2 \simeq 3.5$ attempts where $p_2 = 20\sqrt{2} - 28 \simeq 28.4\%$ . Hence, a 2-primate state requires on average $3.518 \times 4 \simeq 14.072$ photons to produce. The 4-GHZ state then requires $c_2 = 2$ 2-primate states costing a total of 28 photons on average, and it succeeds with a probability of $p_3 = (3 + 2\sqrt{2})/64 \simeq 9.11\%$ corresponding to an average of $1/p_3 \simeq 10.98$ attempts. Thus, the average number of photons needed to produce one 4-GHZ state on average is ~ 309, as originally derived in the prior art known by the skilled person in the art.

We formally extend this method for any number of MUX stages. This gives a recursive formula to compute the cumulative average number of photons consumed to succeed the i-th stage:

$$Equation\ 8: N_{avg,i}\ =\ \frac{c_i N_{avg,i-1}\ +\ a_i}{p_i}$$

where $N_{avg,0} = 1$. Note that this expression gives $N_{avg,3} \simeq 2 \times 309$ for producing two 4-GHZ states.

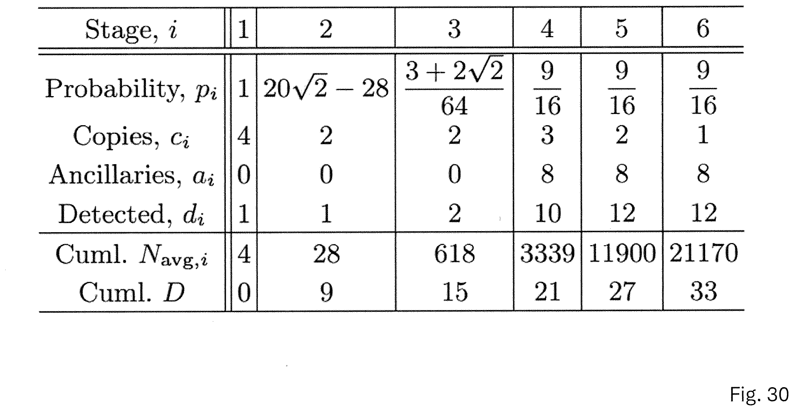

The values of $p_i$, $c_i$ and ai for the six-stage all-photonic scheme are summarized in the table of the figure 30. In figure 30, the table is a summary of the relevant quantities describing the multiplexing stages of the proposed all-photonic scheme to building a Shor encoded (2,2) 6-ring resource state. Here, $p_i$ is the success probability of the i-th stage operation in the absence of loss, $c_i$ is the number of copies needed of the state produced in that stage to attempt the following stage, $a_i$ is the number of ancillary single photons needed for boosting fusion gates, di is the number of detected photons, and cuml. $N_{avg}$ is the cumulative average number of single photons needed to succeed the stage. D is the optical depth needed to construct the resource state and to route the photons through the network.

Following Eq. (8) using the values in the table, we arrive at the total of $N_{avg} = 21170$ single photons for one resource state. Finally, from Eq. (1), we have the upper bound:

$$Equation\ 9: \tilde{\eta}_R\ =\ \frac{24 p_s}{21170}$$

For a heralded SPS with $p_s = 0.5\%$ success probability, the resource efficiency is then bounded by $\eta_R \leq 0.00057\%$, while for a deterministic source it is $\eta_R \leq 0.11\%$. Assuming that the internal clock cycle (the pump repetition rate) is $r_0 = 1$ GHz and we wish to produce resource states at the rate r = 100 MHz, these resource efficiencies correspond to a minimum number of sources of 423400 and 2117, respectively.

To estimate the minimum per-component hardware loss x required to reach the fault-tolerant regime, we first make an optimistic approximation that the optical depth of a photonic MUX does not depend on the number of photonic states being routed between each stage. That is, we assume that the optical depth of the RSG depends only on the type of MUX networks used and the number of MUX stages. For the type of spatial MUX network, we consider a Spanke network that uses two layers of generalized Mach-Zehnder interferometers (GMZIs) with a mode routing network in between. Each GMZI is composed of many beam splitters, but each photon only sees one phase shifter using the most optimistic design. Since a phase shifter is expected to be the most lossy component for a GMZI, we estimate the minimum optical depth to be $D_{GMZI} = 1$. The mode routing network requires photons to be redistributed in space, which requires long propagation distances and for many lossy mode crossings. For this reason, the practical solution is to couple photons into low-loss fibers to redistribute them arbitrarily with minimal propagation loss. However, each chip-to-fiber interface causes non-negligible loss, which we identify as the most lossy component. Since it is necessary to couple out of the first GMZI and into the second GMZI, we estimate the minimum constant optical depth of the mode routing network to be $2D_{coupl.} = 2$.

To route photons through the network, it is also necessary to reconfigure it in between each internal clock cycle. During this time, photons must be stored in a low-loss memory. Assuming that the cycle time is at least 1 ns to allow for classical processing, and knowing that state-of-the-art propagation loss in silicon nitride (SiN) is around 0.4 dB/m, the loss from a single on-chip memory is at least 60 mdB (or around 1.4% loss). Given that chip-to-fiber couplings can already be less than 60 mdB, a fiber memory is more practical and allows for delays much longer than 1 ns without significant loss. Thus, we also assume that every MUX stage begins and ends with a chip-to-fiber interface, bringing the minimum optical depth per spatial MUX stage to $D_s = 2D_{GMZI} + 4D_{coupl.} = 6$.

To allow for temporal multiplexing, we consider the de Bruijn-based spatio-temporal network introduced in, which is similar to the Spanke network but includes an additional GMZI and a layer of delay lines to synchronize photons in time. In this case, the delay lines must store photons longer than 1 ns so that they can be redistributed over many internal clock cycles, leaving no choice but to implement them using fiber memories. Hence, we consider a spatio-temporal MUX to include an additional optical depth of $D_{GMZI} + 2D_{coupl.} = 3$ for a total of $D_{st} = 9$.

Spatio-temporal multiplexing is a useful technique to reduce the number of sources while also allowing control over the RSG rate $r$ independent of the internal rate $r_0$. To gain this flexibility, it is only necessary to use it for one stage while the remaining stages only use a spatial MUX strategy. This brings us to our final lower-bound estimate on the optical depth of an RSG:

$$Equation\ 10{:}\ D\ =\ (N_{mux}\ -\ 1)D_s\ +\ D_{st}$$

where $N_{mux} > 1$ is the number of multiplexing stages for the scheme. Thus for the full six-stage scheme, the minimum optical depth is D = 39, leading to a per-component maximal loss of $x = 1 - 0.925^{1/39} = 0.20\%$.

### 2. Caterpillar scheme

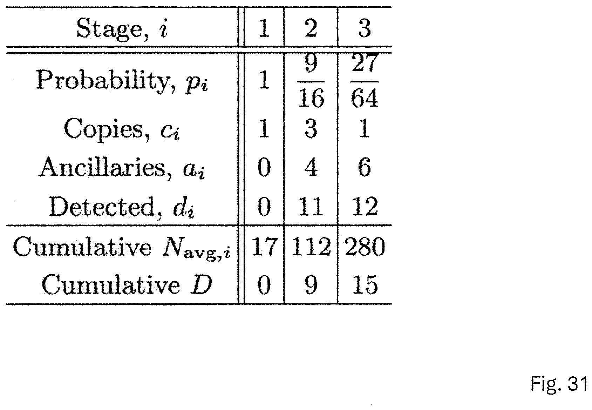

For caterpillar scheme, we can compute the average number of photons $N_{avg}$ required to construct a single resource state using the same formula as for the all-photonic scheme. The probabilities, number of copies, and ancillary photons used for fusion gates are all summarized in the table of figure 31. In figure 31, the table is a summary of the relevant quantities describing the multiplexing stages of the proposed caterpillar scheme to building a Shor encoded (2,2) 6-ring resource state. Here, $p_i$ is the success probability of the i-th stage operation in the absence of loss, $c_i$ is the number of copies needed of the state produced in that stage to attempt the following stage, $a_i$ is the number of ancillary single photons needed for boosting fusion gates, $d_i$ is the number of detected photons, and cuml. $N_{avg}$ is the cumulative average number of single photons needed to succeed the stage. D is the optical depth needed to construct the resource state and to route the photons through the network.

Applying Eq. 8, we find that the average number of photons consumed to produce one resource state on average is $N_{avg} = 280$. This corresponds to an upper bound on the resource efficiency of $\tilde{\eta}_R = 8.6\%$ for the N = 24-photon state. Furthermore, since it is necessary to wait for at least 17 photons to be produced from a single source, the generation rate r is bounded by $r \leq r_0/17$ and hence $N_0 \geq 280/17$, unless additional multiplexing is used to improve the rate.

For the minimum optical depth, we assume the architecture uses the same MUX networks as for the allphotonic architectures, but now using $N_{mux} = 2$. This gives a minimum optical depth of D = 15 for the caterpillar scheme, including one spatial-temporal MUX with depth 9 and one purely spatial MUX with depth 6. This leads to a per-component maximal loss of x = 0.52%.

### 3. RUS scheme

To estimate the performance bounds for the RUS module architecture, we first assume that exactly $N_0 = 12$ sources are used so that the probabilistic nature of the CZ gates is only overcome using RUS, which is a form of temporal multiplexing, rather than photonic spatial multiplexing. Then, we count the average number of CZ gate attempts made per source to estimate $\tau_{avg}$ for the full scheme, which then gives the upper bound using Eq. (5).

Each CZ attempt succeeds with probability 1/2, therefore each round of RUS gates requires 2 attempts on average. Since the maximum degree of the LC-graph is 4 (recall Figure 28 section c), 4 rounds of RUS gates are necessary to produce the spin graph. Thus, all 12 sources must wait for an average of 8 RUS attempts before the LC-graph is complete. Given that local gates do not require feedforward, we assume they are completed much faster than the RUS gates so that they have a negligible impact on r. Finally, we account for two emission cycles that we assume operate at the same rate $r_0$ for simplicity. In total, resource state can be generated using on average $\tau_{avg} = 10$ internal clock cycles. This gives the RUS module approach a maximum resource efficiency of $\tilde{\eta}_R = 24/(12 \times 10) = 20\%$.

As discussed in Section II B 3, the RUS scheme was designed to minimize the optical depth to a single $1 \times 2$ switch. In addition, although some platforms may use chip-to-fiber coupling to route photons through the switch, this is not strictly necessary because photons are stored in the spin memory until the switch is reconfigured. A single switch is also significantly more shallow than a GMZI. For these reasons, we estimate a minimum optical depth of D = 1 for the RUS scheme. This implies that the per-component maximal loss is x = 7.5%, which is significantly higher than all other architectures thanks to the lossless memory of the RUS module. Note that, since 7.5% is also substantially higher than the loss from a $1 \times 2$ switch, the loss will be dominated by the source itself, meaning that a source with $\beta \simeq 92.5\%$ reaches the loss-tolerant regime for this architecture.

### C. Implementations

The performance bounds computed in the previous section already provide an important order-of-magnitude comparison between the different approaches. However, as discussed in Section III A 2, it is not straightforward to design an RSG architecture that approaches the maximum resource efficiency without also increasing optical depth, but there are some MUX strategies that help mitigate this trade-off.

Duplicate multiplexing can improve the trade-off by producing more than one copy of an intermediate state from the same register of sources to feed a single operation in the next stage. For instance, producing a 2primate requires four identical photons. A single register of heralded sources can ensure that at least four photons are generated per clock cycle. This additional routing can be accomplished using the Spanke network discussed previously. However, in reality, the optical depth of the network will grow with an increasing amount of duplicate outputs.

A second important technique is resource sharing, an extension of duplicate multiplexing where copies are grouped to feed multiple operations in the next stage. For example, a register of heralded sources can be connected to two modules, each producing a 2-primate state. If four to eight photons are produced, one 2-primate state can be attempted, while eight or more allows for two attempts. This strategy reduces waste from multiplexing and improves resource efficiency toward the architecture's upper bound. Again, the multiplexing networks described earlier give appropriate flexibility for this task. But, as with duplicate multiplexing, the cost is having a more complicated switching network that will increase the optical depth with the number of photons being routed and thus decrease the maximal loss per component that is compatible with fault-tolerance

In Figure 31 we show how four architectures compare in a practical setting. The shaded regions indicate the performance bounds given in the table of figure 29, while the square points show the optimal MUX that achieves $\eta_{mux} = 1$ and the minimum optical depth in the table of figure 29 simultaneously. The star point illustrates a hypothetical ideal RSG with perfect resource efficiency and zero optical depth, implying that the loss is entirely fixed by the source. The solid lines within each region illustrate the trade-off between loss tolerance and resource efficiency in a practical implementation.

For the all-photonic and caterpillar source architectures, these lines are found by optimizing the resource efficiency for a given value of x by varying the number of sources and the amount of resource sharing at each MUX stage.

For the RUS module, we performed a Monte Carlo simulation of the construction procedure that is illustrated in Figure 28 section c. For this, we consider that each photon used for RUS attempts passes through a linear-optical circuit with a depth of 5, to account for routing photons between sources and performing the measurement.

From Figure 31, it is notable that the RUS scheme also suffers from a trade-off between the resource efficiency and the maximal loss per component, with a marked decrease in resource efficiency as the maximal loss per component approaches the upper bound. This is due to a reduced efficiency of the RUS gate, causing the module to restart some operations whenever a photon is lost. This increases the amount of internal clock cycles needed to ensure $p_{rsg}$ reaches a sufficiently high value. However, even without using additional spatial multiplexing or resource sharing techniques as in the fusion-based schemes, a RUS module with just 12 sources will still approach the resource efficiency bound, provided a low loss per component is achievable.

These results also illustrate that, when taking the maximal acceptable loss per component, the RUS module can be up to 7 orders of magnitude more resource efficient than an architecture using heralded sources with $p_s = 0.5\%$. Improving $p_s$ to at most 25% can reduce the resource overhead of the all-photonic architecture by factor of between 50 and 64, but this surprisingly provides very little improvement to the per-component maximal loss.

DISCUSSION

Natural constraints on RSG rates. Interpreting $\eta_R$ in the context of a physical platform is important to ensure physical suitability. When using an RSG architecture to perform fault-tolerant computations, the rate $r_0$ is constrained by classical electronics due to feedforward operations and detector reset times (estimated at most 1 GHz for dedicated electronics) while the RSG rate r is limited by the error correction cycle, which is dominated by the decoding time (estimated at 1 MHz). If an RSG outpaces decoding, interleaving can be used to reduce the number of RSGs needed for the overall FTQC architecture. Thus, like temporal multiplexing, this is a strategy that can be used to trade rate to reduce the physical source overhead. However, interleaving cannot be used to increase the effective RSG efficiency above the upper bound, and it also reduces the acceptable maximal loss per component due to memories and routing.

Impact of future architecture and component improvements. This study compares high-performing approaches using best known approaches, though none of the explored architectures are expected to be optimal and may be improved in the future, perhaps by considering specific hardware details.

For instance, it is possible to design photonic schemes using fewer stages of multiplexing, provided that switching networks are highly transmissive but memory needed to reconfigure the switching network dominates the losses. It may also be possible to determine a more optimal division of the construction into intermediate states or use of ancillary resources.

On a similar note, the 12-source RUS scheme was designed to minimize the optical depth seen by the resource state. However, there are possibly more resource-efficient schemes that combine the caterpillar graph state generation with RUS gates to reach even better upper bounds on resource efficiency. The consequence will be to use at least one stage of multiplexing, which will increase the minimum optical depth. But, in practice, when accounting for the trade-off between resource efficiency and loss tolerance, such a scheme could outperform the 12-source scheme in both metrics.

Suitability and limits of current state-of-the-art sources for the proposed RSG architectures. In addition to the optical depth, it is crucial to consider the efficiency of the source itself. The per-component maximal loss also offers a good estimate for the minimum source efficiency required by the architecture. For heralded sources, freespace implementations have shown efficiency values up to 94% before lossy collection into a fiber. On-chip implementations necessary to mass fabricate sources can produce high purity photons, but reaching high source efficiency remains a challenge with values around 26%. Deterministic sources have improved significantly over the past decade, with micropillar cavities consistently demonstrating efficiency values above 50% before lossy collection into a fiber. On-chip sources have reached efficiencies up to 86%, but efficient coupling to low-loss waveguides or fibers has yet to be demonstrated. State-of-the-art values are obtained using a tunable open cavity design. This latter approach has demonstrated the highest fibered efficiencies, with 57% in 2020 and 71% in 2023. However, the manufacturability and stability of open cavity designs remains challenging.

In addition to photon collection efficiency, photons that are highly pure and indistinguishable are necessary to ensure high-fidelity fusion and RUS gates. Currently, HSPS hold the record for indistinguishability up to 99.5% of photons from distinct sources, but come with a multi-photon error of 0.7% (integrated autocorrelation of $g^{(2)}(0) = 0.35\%$). The state-of-the-art for indistinguishability between photons from distinct QDs in bulk material is 93.0%, but is expected to reach values exceeding 99% when using a cavity to suppress phonon side-band emission. Quantum dots also consistently provide sub-1% multi-photon errors without compromising other metrics, and they hold the record for multiphoton errors as low as 0.02%.

On-chip optical components are also reaching the high levels of quality needed to implement linearoptical processing. Twenty-mode universal SiN chips are commercially available that reach > 97% transformation fidelity. Using machine learning characterization, universal interferometers can also reach fidelity exceeding 99.77%. Smaller specialized integrated circuits show even higher fidelity, with a standard Mach-Zehnder interferometer reaching a fidelity up to 99.996% when characterized with coherent light. Component losses are also improving, with SiN integrated beam splitters and mode crossings reaching 0.012% and 0.037%, respectively. The components that must still be improved are the chip-to-fiber interface and phase shifter, which incur a loss of 1.3% and 2.3%, respectively. Both these latter values currently exceed the maximum loss per component estimated for all but the RUS-based architecture.

Solid-state QD sources with a qubit degree of freedom have recently demonstrated the generation of small entangled states. These early demonstrations use devices with limited spin coherence times on the order of nanoseconds, which limits graph state sizes. However, it is predicted that 30-photon graph states with > 50% fidelity can be achieved with only minor adjustments. Moreover, state-of-the-art spin coherence times of up to 100 microseconds have been achieved with QDs using dynamical decoupling. This is more than sufficient to construct a 24-photon resource state with > 99.95% fidelity, even when limited by current feedforward times of 23 ns. With this coherence time, resource state fidelity will be primarily limited by single-qubit gates, which can already reach 99.3% and are expected to continue improving, in addition to the RUS gate fidelity, which depends primarily on the purity and indistinguishability of the emitted photons.

<u>V. CONCLUSION</u>

The main strengths of photonic quantum computers are modularity, scalability, and flexibility. It is often said that the main drawback is the resource overhead. However, we demonstrated that this overhead practically vanishes when using deterministic single-photon sources with a single qubit degree of freedom.

The RUS module architecture builds on these strengths by harnessing a key advantage of material platforms deterministic entangling gates. This resource-efficient approach allows high-performance sources to be selected and connected to a RUS module, regardless of their location on a chip. Defective sources and components can be easily replaced or upgraded. Additionally, the module can be reconfigured after fabrication, either by rerouting fibers or programming a photonic integrated circuit, to generate different resource states depending on the task. Our results, combined with recent tailored architectures beyond the fusion-based paradigm leveraging RUS gates and measurements, highlight the untapped potential of hybrid platforms. These advancements open critical avenues for developing more efficient fault-tolerant photonic architectures, accelerating progress toward utility-scale quantum computation while minimizing resource costs.

While certain features of the described embodiments, examples and implementations have been described herein, many modifications, substitutions, changes and equivalents will now occur to the skilled person in the relevant art. It is, therefore, to be understood that the appended claims are intended to cover all such modifications and changes as fall within the scope of the described embodiments and implementations.

**Claims**

1. A system (100) for generating entangled states of a plurality of quantum sources, said plurality of quantum sources being configured to produce at least one plurality of entangled photonic qubits, the system (100) comprising:

   o At least one classical controller (110) configured to control directly and/or indirectly, preferably in real-time, a plurality of modules taken among at least:

- A source module (130);
- A multiplexing module (150);
- An entanglement module (160);

∘ At least one source module (130) configured to generate a plurality of photonic qubits, the source module (130) comprising:

- At least one plurality of quantum sources comprising:

  ▪ at least one quantum source comprising at least one source qubit, and being configured to produce at least one photonic qubit by emitting at least one photon entangled with its source qubit;

- At least one plurality of switches, each switch of the plurality of switches being configured to output at least one photon according to a first direction or a second direction; at least one quantum source of the plurality of quantum sources being associated with at least one switch of the plurality of switches; Preferably, some quantum sources may be routed directly to at least one entanglement module (160);

∘ At least one crossing network module (140) configured to create a first group of photonic qubits and a second group of photonic qubits, the photonic qubits of the first group being configured to establish entanglement with at least one other quantum source, and the photonic qubits of the second group being configured to be processed and released from the system (100);

∘ At least one multiplexing module (150) configured to address at least one photonic qubit to at least one predetermined output of the system, preferably at a predetermined time, the multiplexing module (150) comprising:

- At least one switching network sub-module configured to route each photonic qubit of the second group to at least one predetermined output of the system (100), the switching network sub-module comprising a plurality of sub-switches;

∘ At least one entanglement module (160) configured to apply at least one quantum gate and/or quantum measurement on at least one quantum source of the photonic qubit of the first group by applying at least one quantum gate on at least one photonic qubit of the first group and by measuring the state of said photonic qubit, the entanglement module (160) comprising:

- At least one linear-optical transformation device configured to prepare at least one photonic qubit of the first group to be measured by at least one detector ;
- At least one plurality of detectors configured to measure the state of each photonic qubit coming from the interferometer to determine if at least one quantum gate has been applied on at least one of their respective quantum sources.

2. The system (100) according to the previous claim comprising at least one pulse generation module (120) configured to control at least one laser beam, the laser beam being configured to control at least one quantum source, the pulse generation module (120) comprising:

∘ At least one pulsed laser configured to emit at least one pulsed laser beam;
∘ At least one pulse sequencer configured to sequence at least a plurality of pulsed laser beams according to a predetermined order;
∘ At least one classical switch configured to receive at least one instruction, preferably in real-time, from the classical controller (110), to output or block at least one sequenced pulsed laser beam of the plurality of sequenced pulsed laser beams;

3. The system (100) according to the previous claim wherein:

∘ the classical controller (110) further comprises at least:

- A first input configured to receive classical information from at least one classical information processing module (110);
- A second input configured to receive at least one measurement from at least one detector of the plurality of detectors;
- A first output configured to send instructions to the pulse module (120);
- A second output configured to send instructions to the switches of the plurality of switches of the source module (130);
- A third output configured to send instructions to the interferometer of the entanglement module (160);
- A fourth output configured to send instructions to the switching network sub-module of the multiplexing module (150);
• A fifth output configured to send classical information about the states of the produced qubits;

○ The pulse module (120) further comprising:

• A first input configured to receive instructions from the classical controller (110), and being connected to the first output of the classical controller (110);
• At least a plurality of outputs configured to send at least one sequenced pulsed laser beam to the source module (130);

○ The source module (130) further comprising:

• At least one plurality of inputs, each input of the plurality of inputs being associated with at least one quantum source of the plurality of quantum sources, each input of the plurality of inputs being connected to at least one output of the plurality of outputs of the pulse module (120), and configured to receive at least one sequenced pulsed laser beam ;

○ At least one quantum source of the plurality of quantum sources comprises at least one output connected to at least one switch of the plurality of switches and configured to send at least one photon; preferably the remaining quantum sources being connected to the entanglement module (160);
○ Each switch of the plurality of switches comprises at least one first input connected to at least one output of at least one quantum source of the plurality of quantum sources and configured to receive at least one emitted photon from at least one quantum source of the plurality of quantum sources;
○ Each switch of the plurality of switches comprises at least one first input connected to the classical controller (110) and configured to receive instruction from the classical controller (110);
○ Each switch of the plurality of switches comprises at least a first output and a second output, the first output being connected to the first direction and the second output being connected to the second direction;
○ The crossing module (140) further comprising:

• At least a plurality of inputs, each input of the plurality of inputs being connected to at least one output of the plurality of switches, each input of the plurality of inputs being configured to receive at least one photonic qubit;
• At least a plurality of outputs comprising a first group of outputs and a second group of outputs, the first group of outputs being configured to output the photonic qubits of the first group of photonic qubits and the second group of outputs being configured to output the photonic qubits of the second group of photonic qubits ;

○ The multiplexing module (150) further comprising:

• A first input configured to receive instructions from the classical controller (110) and being connected to the fourth output of the classical controller (110); Preferably, the first input is comprised by the switching network sub-module;
• A plurality of inputs, each input of the plurality of inputs being connected to at least one output of the second group of outputs of the crossing module (140) and configured to receive the photonic qubits of the second group of photonic qubits;
• A plurality of outputs, each output of the plurality of outputs being configured to send at least one photonic qubit of the second group of photonic qubits to the predetermined output of the system (100);

○ The entanglement module (160) further comprising:

• A first input configured to receive instructions from the classical controller (110) and being connected to the third output of the classical controller (110); Preferably, the first input is comprised by the interferometer;
• A plurality of inputs, each input of the plurality of inputs being connected to at least one output of the first group of outputs of the crossing module (140) and configured to receive the photonic qubits of the first group of photonic qubits;
• At least one output configured to send at least one measurement from at least one detector of the plurality of detectors to the classical controller (110), and connected to the second input of the classical controller (110).

4. The system (100) according to any one of the previous claims wherein each quantum source of the plurality of quantum sources comprises at least one quantum emitter, and wherein the quantum emitter is taken among at least:

o A quantum dot
o A solid-state point defect
o An atom
o A molecule
o A trapped ion

5. The system (100) according to any one of the previous claims wherein each switch of the plurality of switches comprises at least one interferometer.

6. The system (100) according to any one of the previous claims wherein each photonic qubit of the first group comprises one single photon, and wherein the interferometer of the entanglement module (160) comprises:

o At least a first beam splitter layer comprising a first plurality of beam splitters, each beam splitter of the plurality of beam splitters comprising at least a first output and a second output, the first beam splitter layer being configured to apply at least one single qubit gate to each photonic qubit of the first group of photonic qubits;
∘ At least one phase shifter layer configured to apply at least one phase gate to each single photonic qubit of the first group of photonic qubits;
∘ At least one permutation layer configured to apply at least one permutation between at least two second outputs of at least two beam splitters of the first plurality of beam splitters;
∘ At least a second beam splitter layer comprising a second plurality of beam splitters, each beam splitter of the second plurality of beam splitters comprising at least a first output and a second output, the second beam splitter layer being configured to apply at least one linear-optical transformation on at least one single photon coming from the permutation layer.

7. The system (100) according to any one of the previous claims being configured to generate at least one entangled graph state using the first group of photonic qubits.

8. The system (100) according to any one of the previous claims wherein the source module (130) is configured to:

o To produce at least one photonic qubit configured to measure the state of at least one source qubit; and/or
o To produce at least one photonic qubit configured to establish entanglement with at least one other source qubit; and/or
o To produce photonic qubits configured to be processed and released from the system (100);

9. A computer-implemented method (200) for generating entangled states of a plurality of sources, said plurality of sources being configured to produce at least one plurality of entangled photonic qubits, the method (200) being configured to be implemented by at least one system (100) according to any one of the previous claims, the method (200) comprising:

o A compilation phase (210) configured to determine a series of steps of a construction process, the compilation phase (210) comprising at least the following steps:

• Inputting (211) a predetermined graph state $G_p$ of qubits and a set of predetermined constraints, the constraints of the set of predetermined constraints comprising at least:

▪ A maximum number of sources, $N_{max}$
▪ One or more metrics $M_i$ configured to be used to discriminate at least two processes to generate $G_p$
▪ At least one predetermined threshold $\varepsilon_i$ associated with at least one metric $M_i$

• Determining (212) at least a plurality of graphs $G_s$ that are local complements of $G_p$;
• For each determined graph $G_s$ that satisfies the constraints of the set of predetermined constraints, decomposing (213) the determined graph $G_s$ into at least one construction process to construct the determined graph $G_s$ using one or more steps comprising at least one among: a measurement step, an entanglement step, and a local operation step such that it minimizes at least one predetermined metric $M_i(G_s)$ within the associated predetermined threshold $\varepsilon_i$;
• Selecting (214) at least one determined graph $G_s$ that satisfies the constraints of the set of predetermined constraints and that minimizes the best the set of predetermined constraints within the plurality of determined graphs, said selected graph associated with at least a plurality of construction processes;
• Selecting (215) at least one construction process among the plurality of construction processes that satisfies the constraints of the set of predetermined constraints and that minimizes the best the set of predetermined constrains within the plurality of construction processes;
• Transpiling (216) the selected construction process into instructions for the classical controller (110) to control at least one of a pulse module (120), the source module, the entangling module (160), and the multiplexing module (150) to implement the selected construction process;

◦ A construction phase (220) configured to construct the predetermined graph state using the selected construction process, the construction phase (220) comprising at least the following steps:

• A measurement step (221) comprising at least the following sub-steps:

▪ Triggering one or more quantum sources of the source module (130) to produce one or more photons entangled with their respective source qubits;
▪ Routing the entangled photons to the entangling module (160), using the crossing network module (140), where the interferometer is set to implement only local gates so that no additional entanglement is generated and each quantum source is then independently measured by the detectors by measuring the entangled photons;
▪ Measuring, using the plurality of detectors of the entanglement module (160), the photons that are entangled with the respective source qubits so that the photon measurement outcome provides an indirect measurement of the state of the source qubits;
▪ Receiving the measurements by the classical controller (110) from the entanglement module (160);
▪ Processing the received measurement by the classical controller (160) ;
▪ Proceeding according to a first predetermined set of instructions;

• An entanglement step (222) comprising at least the following sub-steps:

▪ Triggering one or more quantum sources of the source module (130) to produce one or more photons entangled with their respective source qubits;
▪ Routing the entangled photons to the entangling module (160), using the crossing network module (140), where the interferometer is set to implement an entangling transformation;
▪ Measuring, using the plurality of detectors of the entanglement module (160), the photons, and at least one outcome projects one or more source qubits onto an entangled state;
▪ Receiving the measurements by the classical controller (110) from the entanglement module (160);
▪ Processing the received measurement by the classical controller (110);
▪ Proceeding according to a second predetermined set of instructions;

• A local operation step (223) comprising at least the following sub-steps:

▪ Triggering the source module (130) to apply a predetermined set of single-qubit gates on one or more source qubits.

At least some of the steps of the operation being configured to be executed simultaneously, preferably so long as no source is involved in two steps at the same time; and/or
The steps of the operation phase being configured to be executed in any order and/or repeated and/or executed in an order configured to change during the execution of one or more steps based on a predetermined set of rules.

**10.** The method (200) according to any one of the previous claims wherein the predetermined graph state $G_p$ of qubits is configured to be used in quantum computation, preferably in fusion-based quantum computation and/or for measurement-based quantum computation.

**11.** The method (200) according to any one of the two previous claims wherein the first predetermined set of instructions comprises at least:

◦ Attempting a measurement step again for one or more quantum sources whose measurements were inconclusive; and/or
◦ Moving to a local operation step for one or more quantum sources whose measurements indicate their source qubit state is correct up to a local gate; and/or
◦ Moving to the next available step in the construction process.

**12.** The method (200) according to any one of the three previous claims wherein the second predetermined set of instructions comprises at least:

◦ Attempting another entanglement step (222) for one or more quantum sources whose associated photonic qubit measurements were successful but indicated only local gates were applied; and/or

◦ Moving to a local operation step for one or more quantum sources whose associated photonic qubit measurements indicate the correct entangling gate was applied up to local gates on one or more source qubits; and/or

◦ Partially aborting the construction for one or more quantum sources whose associated photonic qubit measurements were inconclusive; reverting to an earlier step in the construction process or an alternative predetermined branch of the construction process that accounts for the inconclusive entanglement step; and/or

◦ Moving to the next available step in the construction process for one or more quantum sources whose associated photonic qubit measurements were successful and indicated the correct entangling gate was applied.

13. The method (200) according to any one of the four previous claims wherein the construction phase further comprises an emission step comprising at least the following sub-steps:

◦ Configuring by the classical controller (110):

• one or more switches of the plurality of switches to route a plurality of photons to the multiplexing module (150), or
• one or more sub-switches of the plurality of sub-switches to route the photons to at least one predetermined output.

◦ Once the configuration is complete, controlling, by the classical controller (110), the pulse module (120) to trigger one or more quantum sources to emit one or more photons to be released from the system (100)..

14. A computer program product for generating entangled states of a plurality of sources using at least one system (100) according to any one of claims 1 to 8 which, when executed on at least one processing unit, executes the method according to any one of the claims 9 to 13.

15. A non-volatile memory comprising at least one computer program product according to the previous claim.

Vertex (spin)

Edge (CZ gate)

Fig. 2

Vertex (photon)

Edge (CZ gate)

Fig. 1

Example:

EP 4 760 606 A1

Fig. 3

41

Fig. 4

Fig. 5

Fig. 6

EP 4 760 606 A1

Fig. 7

4 subgraphs    2 subgraphs

$\dfrac{L}{C}$

Fig. 8

EP 4 760 606 A1

Fig. 9

110 - Classical Controler

Fig. 10

Fig. 11

Fig. 12

EP 4 760 606 A1

Switch 1×2

Source

From pulse submodule
(laser pulse sequence)

Phase shifter
$\phi(t)$

$\pi/4$

$\pi/4$

Beamsplitter

Mach-Zehnder
Interferometer

Photonic qubits
(quantum wire)

Laser pulses
(semi-classical wire)

Joint quantum-
classical wire

Electron
spin

Filter

Microcavity

Fig. 13

Fig. 14

EP 4 760 606 A1

Fig. 15

EP 4 760 606 A1

160

Detectors

Interferometer

Permutation Network

Fig. 16

Serve the same function

No multiplexing

2x multiplexing

3x multiplexing

Grouped

3 x 1  3 x 1  · · ·

· · ·

Synchronization Network

Fig. 17

Fig. 18

Fig. 19

Fig. 20

EP 4 760 606 A1

210 – Compilation Phase

200

211 - Inputting a predetermined graph state

212 - Determining at least a plurality of graph

213 - Decomposing the determined graph

214 - Selecting at least one determined graph

215 - Selecting at least one construction process

216 - Transpiling it into instructions

220 – Construction Phase

221 - Measurement step

222 - Entanglement step

223 - Local operation

Fig. 21

Example:

Fig. 22

Source node

Caterpillar graph of photons

Measure (preparation)

Entangle

Entangle

LC*

$G_s$

*Using local complementation reduces the
number of entangling gates from 4 to 3 in this
example.

Fig. 23

EP 4 760 606 A1

Example:

Fig. 24

Success

Failure (Erasure)

Failure (Repeat)

Repeat-until-success gate

Photon routers

Photonic qubits

Spin qubits

$a$

$b$

$\eta_a$

$\eta_b$

0 1 2 3

Fig. 25

Resource-State Generator

Single Photons   Seed States   Target State

Fusion Network

Fig. 26

**a.** Heralded SPS

$p_s \ll 1$

Nonlinear Material

Laser Pulses

Frequency-mixed light

Idler

Detector

Filters

Single Photon

Four-wave mixing

**b.** Deterministic SPS

$p_s = 1$

Laser Pulse

Micropillar Cavity

Single Photon

Beam splitter

Filters

Quantum Dot

**c.** Caterpillar Source

$p_s = 1$

Laser Pulses

Micropillar Cavity

Caterpillar Graph

Charged Quantum Dot

Beam splitter

Filters

**d.** RUS Module

$p_s \rightarrow 1$

Classical Control

Laser Pulse

Micropillar Cavity

Beam splitter

Filters

Switch

CZ

Charged Quantum Dot

Switch

Classical Control

Feedforward

Custom Graph

Fig. 27

Fig. 28

| Source | Generation scheme | MUX stages $N_{\mathrm{mux}}$ | Optical depth $D$ | Resource efficiency $\tilde{\eta}_R$ | Number of SPS $N_0$ | Maximal loss per component $x$ |
|---|---|---|---|---|---|---|
| HSPS, $p_s{=}0.005$ | All-photonic | 6 | 39 | 0.00057% | 423400 | 0.20% |
| HSPS, $p_s{=}0.25$ | All-photonic | 6 | 39 | 0.029% | 8468 | 0.20% |
| DSPS | All-photonic | 5 | 33 | 0.11% | 2117 | 0.24% |
| 4-GHZ source | Hybrid | 3 | 21 | 3.1% | 310 | 0.37% |
| Caterpillar source | Caterpillar | 2 | 15 | 8.6% | 28 | 0.52% |
| RUS Module | RUS | 0 | 1 | 20% | 12 | 7.5% |

Fig. 29

| Stage, $i$ | 1 | 2 | 3 | 4 | 5 | 6 |
|---|---|---|---|---|---|---|
| Probability, $p_i$ | 1 | $20\sqrt{2}-28$ | $\dfrac{3+2\sqrt{2}}{64}$ | $\dfrac{9}{16}$ | $\dfrac{9}{16}$ | $\dfrac{9}{16}$ |
| Copies, $c_i$ | 4 | 2 | 2 | 3 | 2 | 1 |
| Ancillaries, $a_i$ | 0 | 0 | 0 | 8 | 8 | 8 |
| Detected, $d_i$ | 1 | 1 | 2 | 10 | 12 | 12 |
| Cuml. $N_{\mathrm{avg},i}$ | 4 | 28 | 618 | 3339 | 11900 | 21170 |
| Cuml. $D$ | 0 | 9 | 15 | 21 | 27 | 33 |

Fig. 30

EP 4 760 606 A1

| Stage, $i$ | 1 | 2 | 3 |
|---|---|---|---|
| Probability, $p_i$ | 1 | $\dfrac{9}{16}$ | $\dfrac{27}{64}$ |
| Copies, $c_i$ | 1 | 3 | 1 |
| Ancillaries, $a_i$ | 0 | 4 | 6 |
| Detected, $d_i$ | 0 | 11 | 12 |
| Cumulative $N_{\mathrm{avg},i}$ | 17 | 112 | 280 |
| Cumulative $D$ | 0 | 9 | 15 |

Fig. 31

EP 4 760 606 A1

## EUROPEAN SEARCH REPORT

**Application Number**

EP 24 31 5568

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GR\'EGOIRE DE GLINIASTY ET AL: "A Spin-Optical Quantum Computing Architecture", ARXIV.ORG, CORNELL UNIVERSITY LIBRARY, 201 OLIN LIBRARY CORNELL UNIVERSITY ITHACA, NY 14853, 9 November 2023 (2023-11-09), XP091655932, * abstract; figures 1, 8, 10 * * section I, lines 87-92 * * section II * * section II-B, paragraph 4 * * section II-C * * section II-D * * section II-E, paragraph 2 * * section III-A * * section III-B, lines 1-11 * * section III-C * * section III-D * * section III-E * * equation (1) * * appendix D * ----- | 1-15 | INV. G06N10/40 G06N10/70 |
| A | KOEN ALEXANDER ET AL: "A manufacturable platform for photonic quantum computing", ARXIV.ORG, CORNELL UNIVERSITY LIBRARY, 201 OLIN LIBRARY CORNELL UNIVERSITY ITHACA, NY 14853, 26 April 2024 (2024-04-26), XP091739303, * the whole document * ----- | 1-15 | **TECHNICAL FIELDS SEARCHED (IPC)** G06N |
| A | US 2022/224996 A1 (NICKERSON NAOMI [US] ET AL) 14 July 2022 (2022-07-14) * the whole document * ----- | 1-15 | |
| A | US 2024/405888 A1 (RUDOLPH TERENCE [US] ET AL) 5 December 2024 (2024-12-05) * the whole document * ----- | 1-15 | |

The present search report has been drawn up for all claims

| Place of search | Date of completion of the search | Examiner |
|---|---|---|
| The Hague | 12 June 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5568

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2025

| Patent document cited in search report | | Publication date | Patent family member(s) | | Publication date |
|---|---|---|---|---|---|
| US 2022224996 A1 | | 14-07-2022 | CA | 3143227 A1 | 24-12-2020 |
| | | | CN | 114631106 A | 14-06-2022 |
| | | | EP | 3987462 A1 | 27-04-2022 |
| | | | JP | 7571955 B2 | 23-10-2024 |
| | | | JP | 2022537399 A | 25-08-2022 |
| | | | JP | 2025020110 A | 12-02-2025 |
| | | | KR | 20220044944 A | 12-04-2022 |
| | | | US | 2022224996 A1 | 14-07-2022 |
| | | | WO | 2020257772 A1 | 24-12-2020 |
| US 2024405888 A1 | | 05-12-2024 | AU | 2022354868 A1 | 11-04-2024 |
| | | | CA | 3233274 A1 | 06-04-2023 |
| | | | EP | 4409474 A1 | 07-08-2024 |
| | | | US | 2024405888 A1 | 05-12-2024 |
| | | | WO | 2023055828 A1 | 06-04-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AHARONOV, DORIT ; BEN-OR, MICHAEL**. Fault-tolerant quantum computation with constant error. *Proceedings of the twenty-ninth annual ACM symposium on Theory of computing*, 1997, 176-188

- **N. CODY JONES et al.** Layered Architecture for Quantum Computing. *Phys. Rev. X*, vol. 2
- **RYSZARD HORODECKI et al.** Quantum entanglement. *Rev. Mod. Phys.*, vol. 81, 865